# EUROPEAN PATENT SPECIFICATION

(11) **EP 4 407 912 B1**
(45) Date of publication and mention of the grant of the patent: **24.12.2025**
(21) Application number: 21957932.3
(22) Date of filing: 24.09.2021
(51) Int. Cl.: H04L 5/00, H04L 1/18, H04W 4/06, H04W 24/02

(54) **METHOD AND APPARATUS FOR DETERMINING HPN CORRESPONDING TO SPS IN MBS**
VERFAHREN UND VORRICHTUNG ZUR BESTIMMUNG VON HPN ENTSPRECHEND SPS IN MBS
PROCÉDÉ ET APPAREIL POUR DÉTERMINER UN HPN CORRESPONDANT À DES SPS DANS UN MBS

(43) Date of publication of application: 31.07.2024
(73) Proprietor: Beijing Xiaomi Mobile Software Co., Ltd., Beijing 100085 (CN)
(72) Inventor: ZHAO, Qun, Beijing 100085 (CN)
(74) Representative: Gunzelmann, Rainer
(86) International application number: PCT/CN2021/120465
(87) International publication number: WO 2023/044808

(56) References cited:
- CN-A- 110 536 460
- CN-A- 111 148 262
- ERICSSON: "Mechanisms to support MBS group scheduling for RRC_CONNECTED UEs", vol. RAN WG1, no. e-Meeting; 20210810 - 20210827, 6 August 2021 (2021-08-06), XP052038851, Retrieved from the Internet <URL:https://ftp.3gpp.org/tsg_ran/WG1_RL1/TSGR1_106-e/Docs/R1-2108170.zip R1-2108170.docx> [retrieved on 20210806]
- INTEL CORPORATION: "MBS Group Scheduling and Power Saving", 3GPP DRAFT; R2-2107446, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Electronic meeting; 20210816 - 20210827, 6 August 2021 (2021-08-06), Mobile Competence Centre ; 650, route des Lucioles ; F-06921 Sophia-Antipolis Cedex ; France , XP052034143

## Description

### TECHNICAL FIELD

The disclosure relates to a field of communication technologies, more particularly, to a method for determining a Hybrid automatic repeat request Process Number (HPN) corresponding to Semi-Persistent Scheduling (SPS) in a Multicast-broadcast Service (MBS) and an apparatus for determining an HPN corresponding to SPS in an MBS.

### BACKGROUND

In wireless communication, in order to perform a Multicast-broadcast Service (MBS), it is necessary to configure a Semi-Persistent Scheduling (SPS) configuration, and Physical Downlink Shared Channels (PDSCHs) corresponding to the SPS configuration correspond to different Hybrid automatic repeat request Process Numbers (HPNs).

A known method is disclosed in ERICSSON: "Mechanisms to support MBS group scheduling for RRC_CONNECTED UEs", 3GPP DRAFT; R1-2108170, 6 August 2021.

### SUMMARY

Embodiments of the disclosure provide a method for determining a Hybrid automatic repeat request Process Number (HPN) corresponding to Semi-Persistent Scheduling (SPS) in a Multicast-broadcast Service (MBS) and an apparatus for determining an HPN corresponding to a SPS in a MBS, which can be performed by an evolved NodeB (eNB), a transmission reception point (TRP), a next generation NodeB (gNB) in a New Radio (NR) system, a base station in any other future mobile communication system or an access node in a wireless fidelity (Wi-Fi) system. By determining HPNs of different Physical Downlink Shared Channels (PDSCHs) corresponding to the SPS transmission, conflict between HPNs corresponding to different PDSCHs can be avoided, thereby improving an execution efficiency of the MBS.

The invention is defined by the appended claims.

In this technical solution, the HPNs of PDSCHs corresponding to different SPS transmissions may be determined according to the SPS configuration information. In this way, conflicts between HPNs corresponding to different PDSCHs can be avoided, thereby improving the execution efficiency of MBS.

### BRIEF DESCRIPTION OF THE DRAWINGS

In order to clearly illustrate technical solutions of embodiments of the disclosure or background technologies, a description of drawings used in the embodiments or the background technologies is given below.
FIG. 1 is a schematic diagram of a communication system provided by an embodiment of the disclosure.
FIG. 2 is a flowchart of a method for determining a Hybrid automatic repeat request Process Number (HPN) corresponding to Semi-Persistent Scheduling (SPS) in a Multicast-broadcast Service (MBS) provided by an embodiment of the disclosure.
FIG. 3 is a flowchart of a method for determining an HPN corresponding to SPS in a MBS provided by an embodiment of the disclosure.
FIG. 4 is a flowchart of a method for determining an HPN corresponding to SPS in a MBS provided by an embodiment of the disclosure.
FIG. 5 is a flowchart of a method for determining an HPN corresponding to SPS in a MBS provided by an embodiment of the disclosure.
FIG. 6 is a flowchart of a method for determining an HPN corresponding to SPS in a MBS provided by an embodiment of the disclosure.
FIG. 7 is a flowchart of a method for determining an HPN corresponding to SPS in a MBS provided by an embodiment of the disclosure.
FIG. 8 is a flowchart of a method for determining an HPN corresponding to SPS in a MBS provided by an embodiment of the disclosure.
FIG. 9 is a flowchart of a method for determining an HPN corresponding to SPS in a MBS provided by an embodiment of the disclosure.
FIG. 10 is a block diagram of an apparatus for determining an HPN corresponding to SPS in a MBS provided by an embodiment of the disclosure.
FIG. 11 is a block diagram of an apparatus for determining an HPN corresponding to SPS in a MBS provided by an embodiment of the disclosure.
FIG. 12 is a block diagram of an apparatus for determining an HPN corresponding to SPS in a MBS provided by an embodiment of the disclosure.
FIG. 13 is a block diagram of an apparatus for determining an HPN corresponding to SPS in a MBS provided by an embodiment of the disclosure.
FIG. 14 is a block diagram of an apparatus for determining an HPN corresponding to SPS in a MBS provided by an embodiment of the disclosure.
FIG. 15 is a block diagram of an apparatus for determining an HPN corresponding to SPS in a MBS provided by an embodiment of the disclosure.
FIG. 16 is a block diagram of an apparatus for determining an HPN corresponding to SPS in a MBS provided by an embodiment of the disclosure.
FIG. 17 is a block diagram of an apparatus for determining an HPN corresponding to SPS in a MBS provided by an embodiment of the disclosure.
FIG. 18 is a schematic diagram of a communication device provided by an embodiment of the disclosure.
FIG. 19 is a schematic diagram of a communication device provided by an embodiment of the disclosure.
FIG. 20 is a schematic diagram of a chip provided by an embodiment of the disclosure.

### DETAILED DESCRIPTION

For ease of understanding, terms involved in this disclosure are introduced at first.

### 1. Multicast-broadcast Service (MBS)

MBS is an important function of a wireless communication system defined by the IEEE802.16e protocol. The MBS is divided into two cases: single-station access and multi-station access. The single- station access refers to a MBS within one station. The multi-station access refers to that all terminals registered to Multicast-broadcast (MB) contents at a network level are able to receive MBSs transmitted synchronously by all stations in a MBS region on downlink connections.

### 2. Downlink Control Information (DCI)

The DCI is carried by a physical downlink control channel (PDCCH), and may include uplink and downlink resource allocation, Hybrid Automatic Repeat Request (HARQ) information, power control, etc. The PDCCH is a physical channel for carrying downlink scheduling information.

### 3. Semi-Persistent Scheduling (SPS)

Dynamic scheduling uses a signaling carried by the PDCCH to notify a terminal of relevant scheduling information at each scheduling moment, which provides great flexibility, but also generates a high signaling load. For regular low-speed services, such signaling overhead is particularly obvious. In order to reduce the signaling load of such services, the 3rd Generation Partnership Project (3GPP) has defined a SPS approach with the idea of allocating resource usage over a long period of time for the regular low-speed services, without the need to send the PDCCH for dynamic allocation in each transmission. The SPS service is usually activated and de-activated by a signaling of the PDCCH, and the signaling of the PDCCH for activation carries scheduling information such as resource allocation. Before de-activating the service, the terminal may send new data packets according to a fixed period based on the relevant scheduling information allocated during activation, unless the relevant scheduling information is updated by a new signaling carried by the PDCCH during the period.

### 4. Scrambling

Scrambling is a digital signal processing method, in which a new signal is obtained by performing an exclusive OR (XOR) operation on a scrambling code and an original signal. Usually, a function of scrambling of an uplink physical channel is to distinguish different terminals, and scrambling of downlink can distinguish cells and channels. The scrambling code can be used to scramble and descramble the original signal. For example, the scrambling code can be used to scramble the DCI, or can be referred to as scrambling the PDCCH. Scrambling the DCI may refer to scrambling a Cyclic Redundancy Check (CRC) field of the DCI. Correspondingly, the terminal descrambles a received DCI, which means that the terminal descrambles the CRC field of the DCI using a corresponding type of scrambling code to determine a format or a type of the DCI.

The scrambling code may include, but is not limited to: a cell radio network temporary identifier (C-RNTI), a temporary cell radio network temporary identifier (TC-RNTI), a group scheduling radio network temporary identifier (GS-RNTI), and a random access radio network temporary identifier (RA-RNTI).

In order to better understand the method for determining a Hybrid automatic repeat request Process Number (HPN) corresponding to SPS in a MBS according to embodiments of the disclosure, a communication system to which embodiments of the disclosure are applicable is first described below.

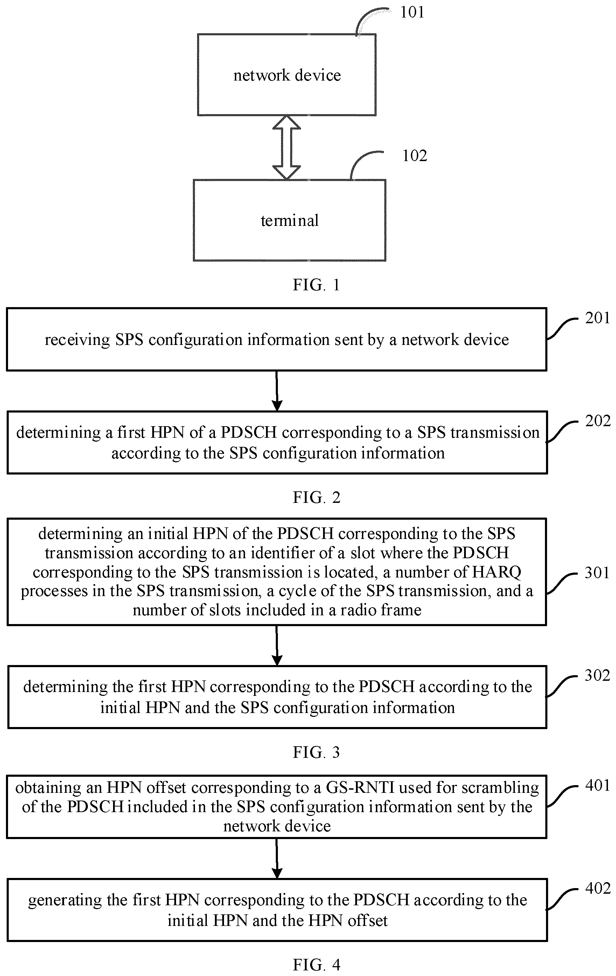

As illustrated in FIG. 1, FIG. 1 is a schematic diagram of a communication system provided by an embodiment of the disclosure. The communication system may include, but is not limited to, a network device and a terminal. The number and the form of devices illustrated in FIG. 1 are only for examples and do not constitute a limitation on the embodiments of the disclosure, and two or more network devices and two or more terminals may be included in practical applications. The communication system illustrated in FIG. 1 includes, for example, one network device 101 and one terminal 102.

It is noted that technical solutions of embodiments of the disclosure can be applied to various communication systems, such as, a long term evolution (LTE) system, a 5th generation (5G) mobile communication system, a 5G new radio (NR) system, or other future new mobile communication systems. It is also noted that a side link in embodiments of the disclosure may also be referred to as a sidelink or a direct link.

The network device 101 in embodiments of the disclosure is an entity on a network side for transmitting or receiving signals. For example, the network device 101 may be an evolved NodeB (eNB), a transmission reception point (TRP), a next generation NodeB (gNB) in a NR system, a station in other future mobile communication systems or an access node in a wireless fidelity (WiFi) system. The specific technology and specific device form adopted by the network device are not limited in embodiments of the disclosure. The network device according to embodiments of the disclosure may be composed of a central unit (CU) and a distributed unit (DU). The CU may also be called a control unit. The use of the CU-DU structure allows to divide a protocol layer of the network device, such as a station. For example, some functions of the protocol layer are placed in the CU for centralized control, and some or all of the remaining functions of the protocol layer are distributed in the DU, and the DU is centrally controlled by the CU.

The terminal 102 in embodiments of the disclosure is an entity on a user side for receiving or transmitting signals, such as a cellular phone. The terminal may also be referred to as terminal device, user equipment (UE), a mobile station (MS), a mobile terminal (MT), and the like. The terminal can be a car with a communication function, a smart car, a mobile phone, a wearable device, a Pad, a computer with a wireless transceiver function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The specific technology and specific device form adopted by the terminal are not limited in embodiments of the disclosure.

In the related art, when performing the MBS, in order to support flexible service combinations and flexible resource allocation, multiple GS-RNTIs may be introduced for a single SPS transmission. Currently, when determining a HPN corresponding to a SPS configuration, a HPN used by each SPS assignment is determined according to an identifier of a slot where a Physical Downlink Shared Channel (PDSCH) corresponding to the SPS transmission is located, a number of HARQ processes in a SPS transmission, a cycle of the SPS transmission, and a number of slots included in a radio frame. However, if multiple GS-RNTIs are configured in the same SPS configuration, there may be conflicts between the HPNs of the PDSCHs scrambled by different GS-RNTIs, which might result in merge errors once retransmission occurs. Currently, there is no clear solution on how to avoid the merge errors caused by the conflicts between the HPNs of the PDSCHs scrambled by different GS-RNTIs.

In the related art, the network device configures one or more SPS configurations for the terminal. Regardless of whether the network device configures one or more SPS configurations, the station may only configure one configured scheduling radio network temporary identifier (CS-RNTI) for the terminal. The network device activates an SPS transmission through a DCI scrambled by the CS-RNTI. However, it does not support configuring multiple CS-RNTIs for one SPS configuration, with poor flexibility during SPS transmission.

In the related art, the network device configures the number of HARQ processes used for SPS transmission for the terminal. The network device and the terminal determine a HARQ ID for the SPS transmission according to the identifier of the slot where the PDSCH corresponding to the SPS transmission is located, the number of HARQ processes in the SPS transmission, the cycle of the SPS transmission, and the number of slots included in the radio frame.

A method for determining the HPN is: HPN= [floor (CURRENT_slot × 10 / (numberOfSlotsPerFrame × periodicity))] modulo nrofHARQ-Processes, in which the CURRENT_slot is the identifier of the slot where the PDSCH corresponding to the SPS transmission is located, the numberOfSlotsPerFrame is the number of slots included in the radio frame, the periodicity is the cycle of the SPS transmission, and the nrofHARQ-Processes is the number of HARQ processes in the SPS transmission. An equation for determining the identifier of the slot where the PDSCH corresponding to the SPS transmission is located is: CURRENT_slot = [(SFN × numberOfSlotsPerFrame) + slot number in the frame]. The SFN is short for a System Frame Number. The "slot number in the frame" is a slot identifier in the radio frame. However, when the PDSCHs corresponding to different SPS transmissions are transmitted in the same slot, the HPNs of the PDSCHs corresponding to multiple SPS transmissions may be identical, which may cause merge errors.

It is understandable that the communication system described in the embodiments of the disclosure is intended to clearly illustrate the technical solutions according to embodiments of the disclosure, and does not constitute a limitation on the technical solutions according to the embodiments of the disclosure. It is understandable by those skilled in the art that as system architectures evolve and new service scenarios emerge, the technical solutions provided by the embodiments of the disclosure are also applicable to similar technical problems.

A method and an apparatus for determining an HPN corresponding to SPS in a MBS may be introduced in detail below with reference to the accompanying drawings.

As illustrated in FIG. 2, FIG. 2 is a flowchart of a method for determining an HPN corresponding to SPS in a MBS provided by an embodiment of the disclosure. The method can be performed by a car with a communication function, a smart car, a mobile phone, a wearable device, a Pad, a computer with a wireless transceiver function, a VR terminal, an AR terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. As illustrated in FIG. 2, the method includes but is not limited to the following steps.

At step 201, SPS configuration information sent by a network device is received.

In embodiments of the disclosure, the SPS configuration information is configured by the network device and sent to the terminal. The SPS configuration information includes, but is not limited to, an identifier of a slot where a PDSCH corresponding to the SPS transmission is located, a number of HARQ processes in a SPS transmission, a cycle of the SPS transmission, and a number of slots included in a radio frame. The first HPN of the PDSCH corresponding to the SPS transmission can be determined according to the SPS configuration information and at least one of: an HPN offset corresponding to a GS-RNTI used for scrambling of the PDSCH, a first HPN adjustment value corresponding to at least one GS-RNTI included in the SPS configuration information, a value of the GS-RNTI used for the scrambling of the PDSCH, and a starting time domain position or an ending time domain position of the PDSCH corresponding to the SPS transmission. The terminal may perform SPS reception according to the first HPN of the PDSCH corresponding to the SPS transmission, and receive data sent by the network device through the SPS transmission.

At step 202, a first HPN of a PDSCH corresponding to a SPS transmission is determined according to the SPS configuration information.

In embodiments of the disclosure, in order to distinguish PDSCHs used for different SPS assignments, the first HPN of the PDSCH corresponding to the SPS transmission is determined according to the SPS configuration information. According to the first HPN, it is possible to determine whether or not each of the SPS configurations is in an active state.

By implementing the embodiments of the disclosure, the HPNs of different PDSCHs corresponding to different SPS transmissions may be determined according to the SPS configuration information. In this way, conflicts between the HPNs corresponding to different PDSCHs can be avoided, to improve the execution efficiency of the MBS.

In a possible embodiment, the PDSCH corresponding to the SPS transmission is scrambled using a GS-RNTI configured by the network device.

In embodiments of the disclosure, the network device scrambles the PDSCH corresponding to the SPS transmission by configuring the GS-RNTI, and the terminals can be classified into several subgroups according to the GS-RNTI. In a possible embodiment, multiple GS-RNTIs are configured in the same SPS configuration. The terminals in the subgroups corresponding to the GS-RNTIs may perform the SPS transmission in the PDSCHs scrambled by the corresponding GS-RNTIs according to the SPS configuration.

As illustrated in FIG. 3, FIG. 3 is a flowchart of a method for determining an HPN corresponding to SPS in a MBS provided by an embodiment of the disclosure. The method can be performed by a car with a communication function, a smart car, a mobile phone, a wearable device, a Pad, a computer with a wireless transceiver function, a VR terminal, an AR terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. As illustrated in FIG. 3, the method includes but is not limited to the following steps.

At step 301, an initial HPN of the PDSCH corresponding to the SPS transmission is determined according to an identifier of a slot where the PDSCH corresponding to the SPS transmission is located, a number of HARQ processes in the SPS transmission, a cycle of the SPS transmission, and a number of slots included in a radio frame.

In embodiments of the disclosure, the SPS configuration information includes, but is not limited to, the identifier of the slot where the PDSCH corresponding to the SPS transmission is located, the number of HARQ processes in the SPS transmission, the cycle of the SPS transmission, and the number of slots included in the radio frame. The initial HPN of the PDSCH corresponding to the SPS transmission can be determined according to the SPS configuration information, which includes, but is not limited to, the identifier of the slot where the PDSCH corresponding to the SPS transmission is located, the number of HARQ processes in the SPS transmission, the cycle of the SPS transmission, and the number of slots included in the radio frame.

The initial HPN is determined by an equation: HPN0= [floor (CURRENT_slot × 10 / (numberOfSlotsPerFrame × periodicity))] modulo nrofHARQ-Processes, in which the HPN0 is the initial HPN, the CURRENT_slot is the identifier of the slot where the PDSCH corresponding to the SPS transmission is located, the numberOfSlotsPerFrame is the number of slots included in the radio frame, the nrofHARQ-Processes is the number of HARQ processes in the SPS transmission, the periodicity is the cycle of the SPS transmission, and floor(x) is a downward rounding function, i.e., a function of obtaining the largest integer among integers less than x. In a possible embodiment, if x=2.1, floor(2.1)=2. Moreover, modulo(a, b) is a modulo operation, i.e., an operation of obtaining a remainder of dividing a by b. In a possible embodiment, a calculation equation of modulo(10,4) is: 10÷4=2 and 10-4×2=2, so that modulo(10,4)=2.

At step 302, the first HPN corresponding of the PDSCH corresponding to the SPS transmission is determined according to the initial HPN and the SPS configuration information.

In embodiments of the disclosure, in order to avoid conflicts between the HPNs of the PDSCHs scrambled by different GS-RNTIs corresponding to the SPS transmission, i.e., to avoid that the HPNs of the PDSCHs corresponding to the SPS transmissions scrambled by different GS-RNTIs are identical, the initial HPN is adjusted according to the SPS configuration information, to distinguish the HPNs of the PDSCHs corresponding to different SPS transmissions.

By implementing the embodiments of the disclosure, the HPNs of the PDSCHs corresponding to different SPS transmissions can be determined according to the initial HPN and the SPS configuration information. In this way, conflicts between the HPNs corresponding to different PDSCHs can be avoided, to improve the execution efficiency of the MBS.

As illustrated in FIG. 4, FIG. 4 is a flowchart of a method for determining an HPN corresponding to SPS in a MBS provided by an embodiment of the disclosure. The method can be performed by a car with a communication function, a smart car, a mobile phone, a wearable device, a Pad, a computer with a wireless transceiver function, a VR terminal, an AR terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. As illustrated in FIG. 4, the method includes but is not limited to the following steps.

At step 401, an HPN offset corresponding to a GS-RNTI used for scrambling of the PDSCH included in the SPS configuration information sent by the network device is obtained.

In embodiments of the disclosure, a network device configures multiple GS-RNTIs for the terminal. A station transmits multiple PDSCHs scrambled by different GS-RNTIs corresponding to the SPS transmission within the same slot. The station configures a HARQ-IDR for each GS-RNTI through a Radio Resource Control (RRC) signaling. The terminal receives the RRC signaling sent by the station and obtains an HARQ-ID offset corresponding to each GS-RNTI. The terminal receives the SPS configuration and adjusts the initial HPN according to the HPN offsets, to distinguish the HPNs of the PDSCHs corresponding to the SPS transmission scrambled by different GS-RNTIs. The HPN offset is referred to as OFFSET_{GS-RNTI}.

At step 402, the first HPN of the PDSCH corresponding to the SPS transmission is generated according to the initial HPN and the HPN offset.

In embodiments of the disclosure, the initial HPN and the HPN offset are added to obtain the PDSCH corresponding to the SPS transmission, i.e., the first HPN of the PDSCH corresponding to the SPS transmission. HPN₁= HPN0+ OFFSET_{GS-RNTI}, in which HPN₁ is the first HPN, HPN0 is the initial HPN, and OFFSET_{GS-RNTI} is the HPN offset.

By implementing the embodiments of the disclosure, the HPNs of the PDSCHs scrambled by different GS-RNTIs corresponding to SPS transmission can be determined according to the HPN offset and the SPS configuration information. In this way, conflicts between the HPNs corresponding to different PDSCHs can be avoided, to improve the execution efficiency of the MBS.

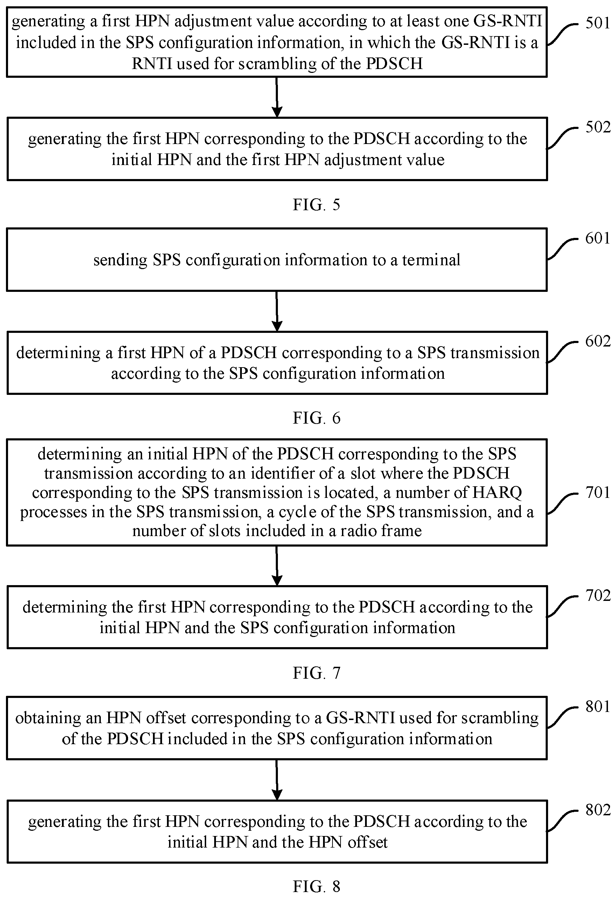

As illustrated in FIG. 5, FIG. 5 is a flowchart of a method for determining an HPN corresponding to SPS in a MBS provided by an embodiment of the disclosure. The method can be performed by a car with a communication function, a smart car, a mobile phone, a wearable device, a Pad, a computer with a wireless transceiver function, a VR terminal, an AR terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. As illustrated in FIG. 5, the method includes but is not limited to the following steps.

At step 501, a first HPN adjustment value is generated according to at least one GS-RNTI included in the SPS configuration information.

In embodiments of the disclosure, a network device configures a plurality of GS-RNTIs for the terminal. The station transmits a plurality of PDSCHs scrambled by different GS-RNTIs corresponding to SPS transmission within the same slot. The first HPN adjustment value is generated according to each of the GS-RNTIs, and the initial HPN is adjusted according to the first HPN adjustment value, to distinguish the HPNs of the PDSCHs scrambled by different GS-RNTIs corresponding to SPS transmission. In a possible embodiment, the first HPN adjustment value is mod(GS-RNTI, nrofHARQ-Processes). Moreover, modulo(a, b) is a modulo operation, i.e., an operation of obtaining a remainder of dividing a by b. In embodiments of the disclosure, the first HPN adjustment value is a modulo result of a value of the GS-RNTI and the nrofHARQ-Processes, i.e., the number of HARQ processes in the SPS transmission.

In a possible embodiment, GS-RNTI=10 and nrofHARQ-Processes=4, thus, a calculation equation of the first HPN adjustment value is: mod(10, 4)=2.

At step 502, the first HPN of the PDSCH corresponding to the SPS transmission is generated according to the initial HPN and the first HPN adjustment value.

In embodiments of the disclosure, the initial HPN and the first HPN are added, to obtain the first HPN of the PDSCH corresponding to the SPS transmission, i.e., HPN₁= HPN0+ mod(GS-RNTI, nrofHARQ-Processes).

By implementing the embodiments of the disclosure, the HPNs of the PDSCHs scrambled by different GS-RNTIs corresponding to SPS transmission can be determined according to the first HPN adjustment value and the SPS configuration information. In this way, conflicts between the HPNs corresponding to different PDSCHs can be avoided, to improve the execution efficiency of the MBS.

In a possible embodiment, the first HPN adjustment value is:
mod(GS-RNTI, nrofHARQ-Processes), in which the nrofHARQ-Processes is the number of HARQ processes in the SPS transmission.

The first HPN adjustment value is mod(GS-RNTI, nrofHARQ-Processes). Moreover, modulo(a, b) is a modulo operation, i.e., an operation of obtaining a remainder of dividing a by b. In embodiments of the disclosure, the first HPN adjustment value is a modulo result of a value of GS-RNTI and the nrofHARQ-Processes, i.e., the number of HARQ processes in the SPS transmission.

In a possible embodiment, GS-RNTI=10 and nrofHARQ-Processes=4, thus, a calculation equation of the first HPN adjustment value is: mod(10, 4)=2.

In a possible embodiment, determining the first HPN of the PDSCH corresponding to the SPS transmission according to the SPS configuration information includes:
determining the first HPN of the PDSCH corresponding to the SPS transmission according to an identifier of a slot where the PDSCH corresponding to the SPS transmission is located, a number of HARQ processes in the SPS transmission, a cycle of the SPS transmission, a number of slots included in a radio frame, and a GS-RNTI.

In embodiments of the disclosure, a network device configures a plurality of GS-RNTIs for the terminal. The station transmits a plurality of PDSCHs scrambled by different GS-RNTIs corresponding to SPS transmission within the same slot. The network device configures the identifier of the slot where the PDSCH corresponding to the SPS transmission is located, the number of HARQ processes in the SPS transmission, the cycle of the SPS transmission, and the number of slots included in the radio frame in the SPS configuration. Meanwhile, the network device configures several GS-RNTIs for the terminal. The first HPNs of the PDSCHs corresponding to the SPS transmission scrambled by the GS-RNTIs are determined according to the configuration in the SPS configuration information and the values of the GS-RNTIs.

By implementing the embodiments of the disclosure, the HPNs of the PDSCHs scrambled by different GS-RNTIs corresponding to SPS transmission can be determined according to the values of the GS-RNTIs and the SPS configuration information. In this way, conflicts between the HPNs corresponding to different PDSCHs can be avoided, to improve the execution efficiency of the MBS.

In a possible embodiment, the first HPN is determined by a following equation:
HPN₁= {floor [CURRENT_slot × 10 / (numberOfSlotsPerFrame × periodicity) + GS-RNTI]} modulo nrofHARQ-Processes, in which the HPN₁ is the first HPN, the CURRENT_slot is the identifier of the slot where the PDSCH corresponding to the SPS transmission is located, the numberOfSlotsPerFrame is the number of slots included in the radio frame, the HARQ-Processes is the number of HARQ processes in the SPS transmission, and the periodicity is the cycle of the SPS transmission.

In embodiments of the disclosure, a network device configures a plurality of GS-RNTIs for the terminal. The station transmits multiple PDSCHs scrambled by different GS-RNTIs corresponding to SPS transmission within the same slot. The terminal considers the value of the GS-RNTI in the calculation equation when determining the HPN corresponding to each SPS transmission (the PDSCH corresponding to the SPS transmission), and determines the first HPN by the following equation: HPN₁= {floor [CURRENT_slot × 10 / (numberOfSlotsPerFrame × periodicity) + GS-RNTI]} modulo nrofHARQ-Processes. This equation puts the value of the GS-RNTI in the floor function to distinguish the HPNs of the PDSCHs scrambled by different GS-RNTIs corresponding to SPS transmission.

In a possible embodiment, the first HPN is determined by a following equation:
HPN₁= {floor [CURRENT_slot × 10 / (numberOfSlotsPerFrame × periodicity)]+ GS-RNTI} modulo nrofHARQ-Processes, in which the HPN₁ is the first HPN, the CURRENT_slot is the identifier of the slot where the PDSCH corresponding to the SPS transmission is located, the numberOfSlotsPerFrame is the number of slots included in the radio frame, the HARQ-Processes is the number of HARQ processes in the SPS transmission, and the periodicity is the cycle of the SPS transmission.

In embodiments of the disclosure, the network device configures multiple GS-RNTIs for the terminal. The station transmits multiple PDSCHs scrambled by different GS-RNTIs corresponding to SPS transmission within the same slot. The terminal considers the value of the GS-RNTI in the calculation equation when determining the HPN corresponding to each SPS transmission (the PDSCH corresponding to the SPS transmission), and determines the first HPN by the following equation: HPN₁= {floor [CURRENT_slot × 10 / (numberOfSlotsPerFrame × periodicity)] + GS-RNTI} modulo nrofHARQ-Processes. This equation puts the value of the GS-RNTI outside the floor function, to distinguish the HPNs of the PDSCHs scrambled by different GS-RNTIs corresponding to the SPS transmission.

In a possible embodiment, the GS-RNTI is a RNTI used for the scrambling of the PDSCH.

In embodiments of the disclosure, the network device configures a plurality of GS-RNTIs for the terminal, and the station transmits a plurality of PDSCHs scrambled by different GS-RNTIs corresponding to SPS transmission within the same slot.

In a possible embodiment, the SPS configuration information includes a starting time domain position or an ending time domain position of the PDSCH corresponding to the SPS transmission, and determining the first HPN of the PDSCH corresponding to the SPS transmission according to the SPS configuration information includes:
determining the first HPN of the PDSCH corresponding to the SPS transmission according to an identifier of a slot where the PDSCH corresponding to the SPS transmission is located, a number of HARQ processes in the SPS transmission, a cycle of the SPS transmission, and a number of slots included in a radio frame, and the starting time domain position or the ending time domain position of the PDSCH corresponding to the SPS transmission.

In embodiments of the disclosure, the network device configures multiple GS-RNTIs for the terminal. The station transmits multiple PDSCHs scrambled by different GS-RNTIs corresponding to SPS transmission within the same slot. The network device configures the identifier of the slot where the PDSCH corresponding to the SPS transmission is located, the number of HARQ processes in the SPS transmission, the cycle of the SPS transmission, and the number of slots included in the radio frame in the SPS configuration. Meanwhile, the network device configures several GS-RNTIs for the terminal. The first HPN of the PDSCH corresponding to the SPS transmission scrambled by the GS-RNTI is determined according to the configuration in the SPS configuration and the starting time domain position or the ending time domain position of the PDSCH corresponding to the SPS transmission. In a possible embodiment, the starting time domain position of the PDSCH corresponding to the SPS transmission is an Orthogonal Frequency Division Multiplexing (OFDM) symbol index of the starting time domain position in the PDSCH corresponding to the SPS transmission scrambled by the GS-RNTI, and the ending time domain position of the PDSCH corresponding to the SPS transmission is an OFDM symbol index of the ending time domain position in the PDSCH corresponding to the SPS transmission scrambled by the GS-RNTI.

By implementing the embodiments of the disclosure, the HPNs of the PDSCHs scrambled by different GS-RNTIs corresponding to SPS transmission can be determined according to the SPS configuration information and the starting time domain position or the ending time domain position of the PDSCH corresponding to the SPS transmission. In this way, conflicts between the HPNs corresponding to different PDSCHs can be avoided, to improve the execution efficiency of the MBS.

In a possible embodiment, the first HPN is determined by a following equation:
HPN₁ = {floor [ CURRENT_slot × 10 / (numberOfSlotsPerFrame × periodicity) + O_{ending-symbol}]} modulo nrofHARQ-Processes, in which the HPN₁ is the first HPN, the CURRENT_slot is the identifier of the slot where the PDSCH corresponding to the SPS transmission is located, the numberOfSlotsPerFrame is the number of slots included in the radio frame, the HARQ-Processes is the number of HARQ processes in the SPS transmission, the periodicity is the cycle of the SPS transmission, and the O_{ending-symbol} is the OFDM symbol index of the ending time domain position of the PDSCH scrambled by the GS-RNTI corresponding to the SPS transmission.

In embodiments of the disclosure, the network device configures multiple GS-RNTIs for the terminal. The station transmits multiple PDSCHs scrambled by different GS-RNTIs corresponding to SPS transmission within the same slot. The terminal considers the OFDM symbol index of the ending time domain position in the PDSCH scrambled by the GS-RNTI corresponding to the SPS transmission when determining the HPN corresponding to each SPS transmission (the PDSCH corresponding to the SPS transmission), and determines the first HPN by the following equation: HPN₁ ={floor [CURRENT_slot × 10 / (numberOfSlotsPerFrame × periodicity) + O_{ending-symbol}]} modulo nrofHARQ-Processes. This equation puts the value of the O_{ending-symbol} in the floor function, to distinguish the HPNs of the PDSCHs scrambled by different GS-RNTIs corresponding to SPS transmission.

In a possible embodiment, the first HPN is determined by a following equation:
HPN₁= {floor[CURRENT_slot × 10 / (numberOfSlotsPerFrame × periodicity)] + O_{ending-symbol} } modulo nrofHARQ-Processes, in which the HPN₁ is the first HPN, the CURRENT_slot is the identifier of the slot where the PDSCH corresponding to the SPS transmission is located, the numberOfSlotsPerFrame is the number of slots included in the radio frame, the HARQ-Processes is the number of HARQ processes in the SPS transmission, the periodicity is the cycle of the SPS transmission, and the O_{ending-symbol} is an OFDM symbol index of the ending time domain position of the PDSCH scrambled by the GS-RNTI corresponding to the SPS transmission.

In embodiments of the disclosure, the network device configures multiple GS-RNTIs for the terminal. The station transmits multiple PDSCHs scrambled by different GS-RNTIs corresponding to SPS transmission within the same slot. The terminal considers the OFDM symbol index of the ending time domain position in the PDSCH scrambled by the GS-RNTI corresponding to the SPS transmission when determining the HPN corresponding to each SPS transmission (the PDSCH corresponding to the SPS transmission), and determines the first HPN by the following equation: HPN₁= {floor[CURRENT_slot × 10 / (numberOfSlotsPerFrame × periodicity)] + O_{ending-symbol} } modulo nrofHARQ-Processes. This equation puts the value of the O_{ending-symbol} outside of the floor function, to distinguish the HPNs of the PDSCHs scrambled by different GS-RNTIs corresponding to SPS transmission.

In a possible embodiment, the first HPN is determined by a following equation:
HPN₁= {floor [CURRENT_slot × 10 / (numberOfSlotsPerFrame × periodicity) + O_{starting-symbol}]}modulo nrofHARQ-Processes, in which the HPN₁ is the first HPN, the CURRENT_slot is the identifier of the slot where the PDSCH corresponding to the SPS transmission is located, the numberOfSlotsPerFrame is the number of slots included in the radio frame, the HARQ-Processes is the number of HARQ processes in the SPS transmission, the periodicity is the cycle of the SPS transmission, and the O_{starting-symbol} is an OFDM symbol index of the starting time domain position of the PDSCH scrambled by the GS-RNTI corresponding to the SPS transmission.

In embodiments of the disclosure, the network device configures multiple GS-RNTIs for the terminal. The station transmits multiple PDSCHs scrambled by different GS-RNTIs corresponding to SPS transmission within the same slot. The terminal considers the OFDM symbol index of the starting time domain position in the PDSCH scrambled by the GS-RNTI corresponding to the SPS transmission when determining the HPN corresponding to each SPS transmission (the PDSCH corresponding to the SPS transmission), and determines the first HPN by the following equation: HPN₁ = {floor [CURRENT_slot × 10 / (numberOfSlotsPerFrame × periodicity) + O_{starting-symbol}]}modulo nrofHARQ-Processes. This equation puts the value of the O_{starting-symbol} in the floor function, to distinguish the HPNs of the PDSCHs scrambled by different GS-RNTIs corresponding to SPS transmission.

In a possible embodiment, the first HPN is determined by a following equation:
HPN₁ = {floor [CURRENT_slot × 10 / (numberOfSlotsPerFrame × periodicity)] + O_{starting-symbol} }modulo nrofHARQ-Processes, in which the HPN₁ is the first HPN, the CURRENT_slot is the identifier of the slot where the PDSCH corresponding to the SPS transmission is located, the numberOfSlotsPerFrame is the number of slots included in the radio frame, the HARQ-Processes is the number of HARQ processes in the SPS transmission, the periodicity is the cycle of the SPS transmission, and the O_{starting-symbol} is an OFDM symbol index of the starting time domain position of the PDSCH scrambled by the GS-RNTI corresponding to the SPS transmission.

In embodiments of the disclosure, the network device configures multiple GS-RNTIs for the terminal. The station transmits multiple PDSCHs scrambled by different GS-RNTIs corresponding to SPS transmission within the same slot. The terminal considers the OFDM symbol index of the starting time domain position in the PDSCH scrambled by the GS-RNTI corresponding to the SPS transmission when determining the HPN corresponding to each SPS transmission (the PDSCH corresponding to the SPS transmission), and determines the first HPN by the following equation: HPN₁ = {floor [CURRENT_slot × 10 / (numberOfSlotsPerFrame × periodicity)] + O_{starting-symbol} }modulo nrofHARQ-Processes. This equation puts the value of the O_{starting-symbol} outside of the floor function, to distinguish the HPNs of the PDSCHs scrambled by different GS-RNTIs corresponding to SPS transmission.

As illustrated in FIG. 6, FIG. 6 is a flowchart of a method for determining an HPN corresponding to SPS in a MBS provided by an embodiment of the disclosure. The method can be performed by an eNB, a TRP, a gNB in a NR system, a station in any other future mobile communication system or an access node in a WiFi system. As illustrated in FIG. 6, the method includes, but is not limited to, the following steps.

At step 601, SPS configuration information is sent to a terminal.

In embodiments of the disclosure, the SPS configuration information is configured by the network device and sent to the terminal. The SPS configuration information includes, but is not limited to, an identifier of a slot where a PDSCH corresponding to the SPS transmission is located, a number of HARQ processes in the SPS transmission, a cycle of the SPS transmission, and a number of slots included in a radio frame. A first HPN of the PDSCH corresponding to the SPS transmission may be determined according to the SPS configuration information and at least one of: an HPN offset corresponding to a GS-RNTI used for scrambling of the PDSCH, a first HPN adjustment value corresponding to at least one GS-RNTI included in the SPS configuration information, a value of the GS-RNTI used for the scrambling of the PDSCH, and a starting time domain position or an ending time domain position of the PDSCH corresponding to the SPS transmission. The terminal may perform the SPS transmission according to the first HPN of the PDSCH corresponding to the SPS transmission, and send data through the SPS transmission.

At step 602, a first HPN of a PDSCH corresponding to a SPS transmission is determined according to the SPS configuration information.

In an embodiment of the disclosure, in order to distinguish PDSCHs used for different SPS assignments, the first HPN of the PDSCH corresponding to the SPS transmission is determined according to the SPS configuration information. According to the first HPN, it is possible to determine whether or not each SPS configuration is in an active state.

Optionally, the PDSCH corresponding to the SPS transmission is scrambled by using a GS-RNTI corresponding to the terminal.

In embodiments of the disclosure, the network device scrambles the PDSCH corresponding to the SPS transmission by configuring the GS-RNTI, and the terminals can be classified into several subgroups according to the GS-RNTI. In a possible embodiment, multiple GS-RNTIs are configured in the same SPS configuration. The terminals in the subgroups corresponding to the GS-RNTIs may perform the SPS transmission in the PDSCHs scrambled by the corresponding GS-RNTIs according to the SPS configuration.

As illustrated in FIG. 7, FIG. 7 is a flowchart of a method for determining an HPN corresponding to SPS in a MBS provided by an embodiment of the disclosure. The method can be performed by an eNB, a TRP, a gNB in a NR system, a station in any other future mobile communication system or an access node in a WiFi system. As illustrated in FIG. 7, the method includes, but is not limited to, the following steps.

At step 701, an initial HPN of the PDSCH corresponding to the SPS transmission is determined according to an identifier of a slot where the PDSCH corresponding to the SPS transmission is located, a number of HARQ processes in the SPS transmission, a cycle of the SPS transmission, and a number of slots included in a radio frame.

In embodiments of the disclosure, the SPS configuration information includes, but is not limited to, the identifier of the slot where the PDSCH corresponding to the SPS transmission is located, the number of HARQ processes in the SPS transmission, the cycle of the SPS transmission, and the number of slots included in the radio frame. The initial HPN of the PDSCH corresponding to the SPS transmission can be determined according to the SPS configuration information, which includes, but is not limited to, the identifier of the slot where the PDSCH corresponding to the SPS transmission is located, the number of HARQ processes in the SPS transmission, the cycle of the SPS transmission, and the number of slots included in the radio frame.

The initial HPN is determined by an equation: HPN0= [floor (CURRENT_slot × 10 / (numberOfSlotsPerFrame × periodicity))] modulo nrofHARQ-Processes, in which the HPN0 is the initial HPN, CURRENT_slot is the identifier of the slot where the PDSCH corresponding to the SPS transmission is located, the numberOfSlotsPerFrame is the number of slots included in the radio frame, nrofHARQ-Processes is the number of HARQ processes in the SPS transmission, the periodicity is the cycle of the SPS transmission, and floor(x) is a downward rounding function, i.e., a function of obtaining the largest integer among integers less than x. In a possible embodiment, if x=2.1, floor(2.1)=2. Moreover, modulo(a, b) is a modulo operation, i.e., an operation of obtaining a remainder of dividing a by b. In a possible embodiment, a calculation equation of modulo(10,4) is: 10÷4=2 and 10-4×2=2, so that modulo(10,4)=2.

At step 702, the first HPN of the PDSCH corresponding to the SPS transmission is determined according to the initial HPN and the SPS configuration information.

In embodiments of the disclosure, in order to avoid conflicts between the HPNs of the PDSCHs scrambled by different GS-RNTIs corresponding to the SPS transmission, i.e., to avoid that the HPNs of the PDSCHs corresponding to the SPS transmissions scrambled by different GS-RNTIs are identical, the initial HPN is adjusted according to the SPS configuration information, to distinguish the HPNs of the PDSCHs corresponding to different SPS transmissions.

As illustrated in FIG. 8, FIG. 8 is a flowchart of a method for determining an HPN corresponding to SPS in a MBS provided by an embodiment of the disclosure. The method can be performed by an eNB, a TRP, a gNB in a NR system, a station in any other future mobile communication system or an access node in a WiFi system. As illustrated in FIG. 8, the method includes, but is not limited to, the following steps.

At step 801, an HPN offset corresponding to a GS-RNTI used for scrambling of the PDSCH included in the SPS configuration information is obtained.

In embodiments of the disclosure, the network device configures multiple GS-RNTIs for the terminal. The station transmits multiple PDSCHs scrambled by different GS-RNTIs corresponding to the SPS transmission within the same slot. The station configures a HARQ-IDR for each GS-RNTI through a RRC signaling. The terminal receives the RRC signaling sent by the station and obtains an HARQ-ID offset corresponding to each GS-RNTI. The terminal receives the SPS configuration and adjusts the initial HPN according to the HPN offsets, to distinguish the HPNs of the PDSCHs corresponding to the SPS transmission scrambled by different GS-RNTIs. The HPN offset is referred to as OFFSETGS-RNTI.

At step 802, the first HPN of the PDSCH corresponding to the SPS transmission is generated according to the initial HPN and the HPN offset.

In embodiments of the disclosure, the initial HPN and the HPN offset are added to obtain the PDSCH corresponding to the SPS transmission, i.e., the first HPN of the PDSCH corresponding to the SPS transmission. HPN₂= HPN0+ OFFSET_{GS-RNTI}, in which HPN₂ is the first HPN, HPNO is the initial HPN, and OFFSET_{GS-RNTI} is the HPN offset.

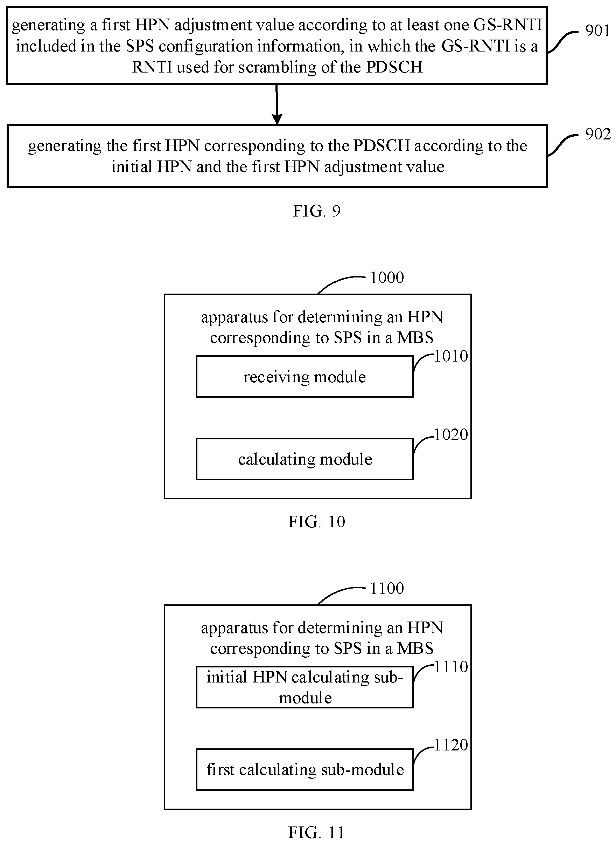

As illustrated in FIG. 9, FIG. 9 is a flowchart of a method for determining an HPN corresponding to SPS in a MBS provided by an embodiment of the disclosure. The method can be performed by an eNB, a TRP, a gNB in a NR system, a station in any other future mobile communication system or an access node in a WiFi system. As illustrated in FIG. 9, the method includes, but is not limited to, the following steps.

At step 901, a first HPN adjustment value is generated according to at least one GS-RNTI included in the SPS configuration information.

In embodiments of the disclosure, the network device configures a plurality of GS-RNTIs for the terminal. The station transmits a plurality of PDSCHs scrambled by different GS-RNTIs corresponding to SPS transmission within the same slot. The first HPN adjustment value is generated according to each of the GS-RNTIs, and the initial HPN is adjusted according to the first HPN adjustment value, to distinguish the HPNs of the PDSCHs scrambled by different GS-RNTIs corresponding to SPS transmission. In a possible embodiment, the first HPN adjustment value is mod(GS-RNTI, nrofHARQ-Processes). Moreover, modulo(a, b) is a modulo operation, i.e., an operation of obtaining a remainder of dividing a by b. In embodiments of the disclosure, the first HPN adjustment value is a modulo result of a value of the GS-RNTI and the nrofHARQ-Processes, i.e., the number of HARQ processes in the SPS transmission.

In a possible embodiment, GS-RNTI=10 and nrofHARQ-Processes=4, the calculation equation of the first HPN adjustment value is: mod(10, 4)=2.

At step 902, the first HPN of the PDSCH corresponding to SPS transmission is generated according to the initial HPN and the first HPN adjustment value.

In embodiments of the disclosure, the initial HPN and the first HPN are added, to obtain the first HPN of the PDSCH corresponding to the SPS transmission, i.e., HPN₂= HPN0+ mod(GS-RNTI, nrofHARQ-Processes).

Optionally, the first HPN adjustment value is:
mod(GS-RNTI, nrofHARQ-Processes), in which the nrofHARQ-Processes is the number of HARQ processes in the SPS transmission.

The first HPN adjustment value is mod(GS-RNTI, nrofHARQ-Processes). Moreover, modulo(a, b) is a modulo operation, i.e., ab operation of obtaining a remainder of dividing a by b. In embodiments of the disclosure, the first HPN adjustment value is a modulo result of a value of GS-RNTI and the nrofHARQ-Processes, i.e., the number of HARQ processes in the SPS transmission.

In a possible embodiment, GS-RNTI=10 and nrofHARQ-Processes=4, thus, a calculation equation of the first HPN adjustment value is: mod(10, 4)=2.

Optionally, determining the first HPN of the PDSCH corresponding to the SPS transmission according to the SPS configuration information includes:
determining the first HPN of the PDSCH corresponding to the SPS transmission according to an identifier of a slot where the PDSCH corresponding to the SPS transmission is located, a number of HARQ processes in the SPS transmission, a cycle of the SPS transmission, a number of slots included in a radio frame, and a GS-RNTI.

In embodiments of the disclosure, the network device configures multiple GS-RNTIs for the terminal. The station transmits multiple PDSCHs scrambled by different GS-RNTIs corresponding to SPS transmission within the same slot. The network device configures the identifier of the slot where the PDSCH corresponding to the SPS transmission is located, the number of HARQ processes in the SPS transmission, the cycle of the SPS transmission, and the number of slots included in the radio frame in the SPS configuration. Meanwhile, the network device configures several GS-RNTIs for the terminal, and determines the first HPNs of the PDSCHs corresponding to the SPS transmission scrambled by the GS-RNTIs according to the configuration in the SPS configuration information and the values of the GS-RNTIs.

Optionally, the first HPN is determined by a following equation:
HPN₂= {floor [ CURRENT_slot × 10 / (numberOfSlotsPerFrame × periodicity) + GS-RNTI]} modulo nrofHARQ-Processes, in which the HPN₂ is the first HPN, the CURRENT_slot is the identifier of the slot where the PDSCH corresponding to the SPS transmission is located, the numberOfSlotsPerFrame is the number of slots included in the radio frame, the HARQ-Processes is the number of HARQ processes in the SPS transmission, and the periodicity is the cycle of the SPS transmission.

In embodiments of the disclosure, the network device configures multiple GS-RNTIs for the terminal. The station transmits multiple PDSCHs scrambled by different GS-RNTIs corresponding to SPS transmission within the same slot. The terminal considers the value of the GS-RNTI in the calculation equation when determining the HPN corresponding to each SPS transmission (the PDSCH corresponding to the SPS transmission), and determines the first HPN by the following equation: HPN₂= {floor [CURRENT_slot × 10 / (numberOfSlotsPerFrame × periodicity) + GS-RNTI]} modulo nrofHARQ-Processes. This equation puts the value of the GS-RNTI in the floor function, to distinguish the HPNs of the PDSCHs scrambled by different GS-RNTIs corresponding to the SPS transmission.

Optionally, the first HPN is determined by a following equation:
HPN₂= {floor [CURRENT_slot × 10 / (numberOfSlotsPerFrame × periodicity)]+ GS-RNTI}modulo nrofHARQ-Processes, in which the HPN₂ is the first HPN, the CURRENT_slot is the identifier of the slot where the PDSCH corresponding to the SPS transmission is located, the numberOfSlotsPerFrame is the number of slots included in the radio frame, the HARQ-Processes is the number of HARQ processes in the SPS transmission, and the periodicity is the cycle of the SPS transmission.

In embodiments of the disclosure, the network device configures multiple GS-RNTIs for the terminal. The station transmits multiple PDSCHs scrambled by different GS-RNTIs corresponding to SPS transmission within the same slot. The terminal considers the value of the GS-RNTI in the calculation equation when determining the HPN corresponding to each SPS transmission (the PDSCH corresponding to the SPS transmission), and determines the first HPN by the following equation: HPN₂= {floor [CURRENT_slot × 10 / (numberOfSlotsPerFrame × periodicity)]+ GS-RNTI}modulo nrofHARQ-Processes. This equation puts the value of the GS-RNTI outside of the floor function, to distinguish the HPNs of the PDSCHs scrambled by different GS-RNTIs corresponding to the SPS transmission.

Optionally, the GS-RNTI is a RNTI used for the scrambling of the PDSCH.

In embodiments of the disclosure, the network device configures a plurality of GS-RNTIs for the terminal, and the station transmits a plurality of PDSCHs scrambled by different GS-RNTIs corresponding to SPS transmission within the same slot.

Optionally, the SPS configuration information includes a starting time domain position or an ending time domain position of the PDSCH corresponding to the SPS transmission, and determining the first HPN of the PDSCH corresponding to the SPS transmission according to the SPS configuration information includes:
determining the first HPN of the PDSCH corresponding to the SPS transmission according to an identifier of a slot where the PDSCH corresponding to the SPS transmission is located, a number of HARQ processes in the SPS transmission, a cycle of the SPS transmission, and a number of slots included in a radio frame, and the starting time domain position or the ending time domain position of the PDSCH corresponding to the SPS transmission.

In embodiments of the disclosure, the network device configures multiple GS-RNTIs for the terminal. The station transmits multiple PDSCHs scrambled by different GS-RNTIs corresponding to SPS transmission within the same slot. The network device configures the identifier of the slot where the PDSCH corresponding to the SPS transmission is located, the number of HARQ processes in the SPS transmission, the cycle of the SPS transmission, and the number of slots included in the radio frame in the SPS configuration. Meanwhile, the network device configures several GS-RNTIs for the terminal, and determines the first HPN of the PDSCH corresponding to the SPS transmission scrambled by the GS-RNTI according to the configuration in the SPS configuration and the starting time domain position or the ending time domain position of the PDSCH corresponding to the SPS transmission. In a possible embodiment, the starting time domain position of the PDSCH corresponding to the SPS transmission is an OFDM symbol index of the starting time domain position in the PDSCH corresponding to the SPS transmission scrambled by the GS-RNTI, and the ending time domain position of the PDSCH corresponding to the SPS transmission is an OFDM symbol index of the ending time domain position in the PDSCH corresponding to the SPS transmission scrambled by the GS-RNTI.

Optionally, the first HPN is determined by a following equation:
HPN₂={floor [ CURRENT_slot × 10 / (numberOfSlotsPerFrame × periodicity) + O_{ending-symbol}]} modulo nrofHARQ-Processes, in which the HPN₂ is the first HPN, the CURRENT_slot is the identifier of the slot where the PDSCH corresponding to the SPS transmission is located, the numberOfSlotsPerFrame is the number of slots included in the radio frame, the HARQ-Processes is the number of HARQ processes in the SPS transmission, tahe periodicity is the cycle of the SPS transmission, and the O_{ending-symbol} is the OFDM symbol index of the ending time domain position of the PDSCH scrambled by the GS-RNTI corresponding to the SPS transmission.

In embodiments of the disclosure, the network device configures multiple GS-RNTIs for the terminal. The station transmits multiple PDSCHs scrambled by different GS-RNTIs corresponding to SPS transmission within the same slot. The terminal considers the OFDM symbol index of the ending time domain position in the PDSCH scrambled by the GS-RNTI corresponding to the SPS transmission when determining the HPN corresponding to each SPS transmission (the PDSCH corresponding to the SPS transmission), and determines the first HPN by the following equation: HPN₂ ={floor [ CURRENT_slot × 10 / (numberOfSlotsPerFrame × periodicity) + O_{ending-symbol}]} modulo nrofHARQ-Processes. This equation puts the value of the O_{ending-symbol} in the floor function, to distinguish the HPNs of the PDSCHs scrambled by different GS-RNTIs corresponding to the SPS transmission.

Optionally, the first HPN is determined by a following equation:
HPN₂= {floor[CURRENT_slot × 10 / (numberOfSlotsPerFrame × periodicity)] + O_{ending-symbol} } modulo nrofHARQ-Processes, in which the HPN₂ is the first HPN, the CURRENT_slot is the identifier of the slot where the PDSCH corresponding to the SPS transmission is located, the numberOfSlotsPerFrame is the number of slots included in the radio frame, the HARQ-Processes is the number of HARQ processes in the SPS transmission, the periodicity is the cycle of the SPS transmission, and the O_{ending-symbol} is an OFDM symbol index of the ending time domain position of the PDSCH scrambled by the GS-RNTI corresponding to the SPS transmission.

In embodiments of the disclosure, the network device configures multiple GS-RNTIs for the terminal. The station transmits multiple PDSCHs scrambled by different GS-RNTIs corresponding to SPS transmission within the same slot. The terminal considers the OFDM symbol index of the ending time domain position in the PDSCH scrambled by the GS-RNTI corresponding to the SPS transmission when determining the HPN corresponding to each SPS transmission (the PDSCH corresponding to the SPS transmission), and determines the first HPN by the following equation: HPN₂= {floor[CURRENT_slot × 10 / (numberOfSlotsPerFrame × periodicity)] + O_{ending-symbol} } modulo nrofHARQ-Processes. This equation puts the value of the O_{ending-symbol} outside of the floor function, to distinguish the HPNs of the PDSCHs scrambled by different GS-RNTIs corresponding to the SPS transmission.

Optionally, the first HPN is determined by a following equation:
HPN₂= {floor [CURRENT_slot × 10 / (numberOfSlotsPerFrame × periodicity) + O_{starting-symbol}]}modulo nrofHARQ-Processes, in which the HPN₂ is the first HPN, the CURRENT_slot is the identifier of the slot where the PDSCH corresponding to the SPS transmission is located, the numberOfSlotsPerFrame is the number of slots included in the radio frame, the HARQ-Processes is the number of HARQ processes in the SPS transmission, the periodicity is the cycle of the SPS transmission, and the O_{starting-symbol} is an OFDM symbol index of the starting time domain position of the PDSCH scrambled by the GS-RNTI corresponding to the SPS transmission.

In embodiments of the disclosure, the network device configures multiple GS-RNTIs for the terminal. The station transmits multiple PDSCHs scrambled by different GS-RNTIs corresponding to SPS transmission within the same slot. The terminal considers the OFDM symbol index of the starting time domain position in the PDSCH scrambled by the GS-RNTI corresponding to the SPS transmission when determining the HPN corresponding to each SPS transmission (the PDSCH corresponding to the SPS transmission), and determines the first HPN by the following equation: HPN₂= {floor [CURRENT_slot × 10 / (numberOfSlotsPerFrame × periodicity) + O_{starting-symbol}]}modulo nrofHARQ-Processes. This equation puts the value of the O_{starting-symbol} in the floor function, to distinguish the HPNs of the PDSCHs scrambled by different GS-RNTIs corresponding to the SPS transmission.

Optionally, the first HPN is determined by a following equation:
HPN₂ = {floor [CURRENT_slot × 10 / (numberOfSlotsPerFrame × periodicity)] + O_{starting-symbol} }modulo nrofHARQ-Processes, in which the HPN₂ is the first HPN, the CURRENT_slot is the identifier of the slot where the PDSCH corresponding to the SPS transmission is located, the numberOfSlotsPerFrame is the number of slots included in the radio frame, the HARQ-Processes is the number of HARQ processes in the SPS transmission, the periodicity is the cycle of the SPS transmission, and the O_{starting-symbol} is an OFDM symbol index of the starting time domain position of the PDSCH scrambled by the GS-RNTI corresponding to the SPS transmission.

In embodiments of the disclosure, the network device configures multiple GS-RNTIs for the terminal. The station transmits multiple PDSCHs scrambled by different GS-RNTIs corresponding to SPS transmission within the same slot. The terminal considers the OFDM symbol index of the starting time domain position in the PDSCH scrambled by the GS-RNTI corresponding to the SPS transmission when determining the HPN corresponding to each SPS transmission (the PDSCH corresponding to the SPS transmission), and determines the first HPN by the following equation: HPN₂={floor [CURRENT_slot × 10 / (numberOfSlotsPerFrame × periodicity)] + O_{starting-symbol} }modulo nrofHARQ-Processes. This equation puts the value of the O_{starting-symbol} outside of the floor function, to distinguish the HPNs of the PDSCHs scrambled by different GS-RNTIs corresponding to the SPS transmission.

In the above embodiments of the disclosure, the method provided in embodiments of the disclosure is described from the perspectives of the network device and the terminal, respectively. In order to realize each of the above-described functions in the method provided by the embodiments of the disclosure, the network device and the terminal may include a hardware structure and a software module, and realize each of the above-described functions in the form of a hardware structure, a software module, or a combination of the hardware structure and the software module. A certain function of each of the above functions may be performed in the form of a hardware structure, a software module, or a combination of the hardware structure and the software module.

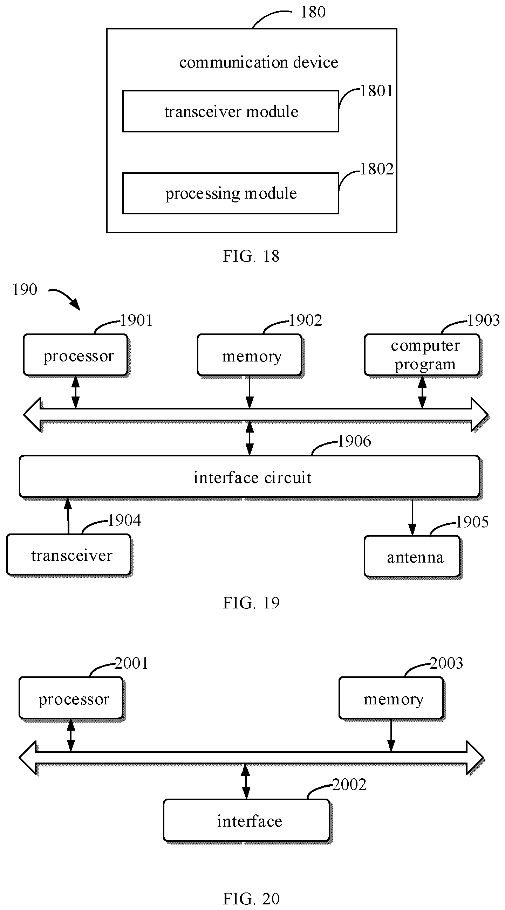

As illustrated in FIG. 18, FIG. 18 is a block diagram of a communication device 180 provided by an embodiment of the disclosure. The communication device 180 illustrated in FIG. 18 may include a transceiver module 1801 and a processing module 1802. The transceiver module 1801 may include a transmitting module and/or a receiving module. The transmitting module is configured to perform a transmitting function, and the receiving module is configured to perform a receiving function, so that the transceiver module 1801 can realize the transmitting function and/or the receiving function.

The communication device 180 may be a terminal (e.g., the terminal in the above method embodiments), a device in the terminal, or a device capable of being used in combination with the terminal. Alternatively, the communication device 180 may be a network device, a device in the network device, or a device capable of being used in combination with the network device.

The communication device 180 is a terminal. As illustrated in FIG. 10, FIG. 10 is a block diagram of an apparatus for determining an HPN corresponding to SPS in a MBS provided by an embodiment of the disclosure. As illustrated in FIG. 10, the apparatus 1000 includes, but is not limited to:
a receiving module 1010, configured to receive SPS configuration information sent by a network device; and
a calculating module 1020, configured to determine a first HPN of a PDSCH corresponding to a SPS transmission according to the SPS configuration information.

Optionally, the PDSCH corresponding to the SPS transmission is scrambled by a GS-RNTI configured by the network device.

As illustrated in FIG. 11, FIG. 11 is a block diagram of an apparatus for determining an HPN corresponding to SPS in a MBS provided by an embodiment of the disclosure. As illustrated in FIG. 11, the apparatus 1100 includes, but is not limited to:
an initial HPN calculating sub-module 1110, configured to determine an initial HPN of the PDSCH corresponding to the SPS transmission according to an identifier of a slot where the PDSCH corresponding to the SPS transmission is located, a number of HARQ processes in the SPS transmission, a cycle of the SPS transmission, and a number of slots included in a radio frame; and
a first calculating sub-module 1120, configured to determine the first HPN of the PDSCH corresponding to the SPS transmission according to the initial HPN and the SPS configuration information.

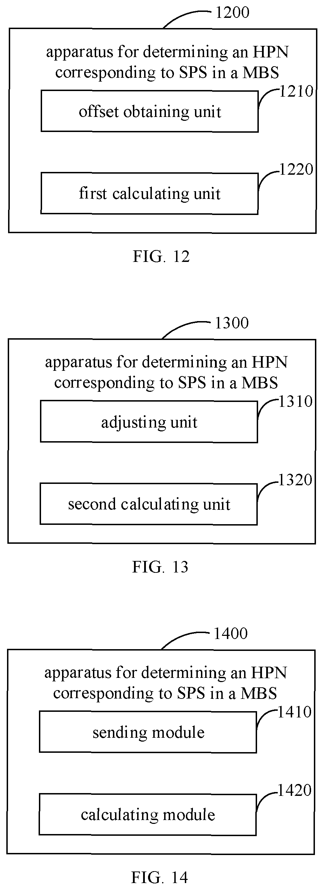

As illustrated in FIG. 12, FIG. 12 is a block diagram of an apparatus for determining an HPN corresponding to SPS in a MBS provided by an embodiment of the disclosure. As illustrated in FIG. 12, the apparatus 1200 includes, but is not limited to:
an offset obtaining unit 1210, configured to obtain an HPN offset corresponding to a GS-RNTI used for scrambling of the PDSCH included in the SPS configuration information sent by the network device; and
a first calculating unit 1220, configured to generate the first HPN of the PDSCH corresponding to the SPS transmission according to the initial HPN and the HPN offset.

As illustrated in FIG. 13, FIG. 13 is a block diagram of an apparatus for determining an HPN corresponding to SPS in a MBS provided by an embodiment of the disclosure. As illustrated in FIG. 13, the apparatus 1300 includes, but is not limited to:
an adjusting unit 1310, configured to generate a first HPN adjustment value according to at least one GS-RNTI included in the SPS configuration information; and
a second calculating unit 1320, configured to generate the first HPN of the PDSCH corresponding to the SPS transmission according to the initial HPN and the first HPN adjustment value.

Optionally, the first HPN adjustment value is:
mod(GS-RNTI, nrofHARQ-Processes), and the nrofHARQ-Processes is the number of HARQ processes in the SPS transmission.

Optionally, the calculating module includes:
a second calculating sub-module, configured to determine the first HPN of the PDSCH corresponding to the SPS transmission according to an identifier of a slot where the PDSCH corresponding to the SPS transmission is located, a number of HARQ processes in the SPS transmission, a cycle of the SPS transmission, a number of slots included in a radio frame, and a GS-RNTI.

Optionally, the first HPN is determined by a following equation:
HPN₁= {floor [CURRENT_slot × 10 / (numberOfSlotsPerFrame × periodicity) + GS-RNTI]} modulo nrofHARQ-Processes, in which the HPN₁ is the first HPN, the CURRENT_slot is the identifier of the slot where the PDSCH corresponding to the SPS transmission is located, the numberOfSlotsPerFrame is the number of slots included in the radio frame, the HARQ-Processes is the number of HARQ processes in the SPS transmission, and the periodicity is the cycle of the SPS transmission.

Optionally, the first HPN is determined by a following equation:
HPN₁= {floor [CURRENT_slot × 10 / (numberOfSlotsPerFrame × periodicity)]+ GS-RNTI}modulo nrofHARQ-Processes, in which the HPN₁ is the first HPN, the CURRENT_slot is the identifier of the slot where the PDSCH corresponding to the SPS transmission is located, the numberOfSlotsPerFrame is the number of slots included in the radio frame, the HARQ-Processes is the number of HARQ processes in the SPS transmission, and the periodicity is the cycle of the SPS transmission.

Optionally, the GS-RNTI is an RNTI used for the scrambling of the PDSCH.

Optionally, the SPS configuration information includes a starting time domain position or an ending time domain position of the PDSCH corresponding to the SPS transmission, and the calculating module includes:
a third calculating sub-module, configured to determine the first HPN of the PDSCH corresponding to the SPS transmission according to an identifier of a slot where the PDSCH corresponding to the SPS transmission is located, a number of HARQ processes in the SPS transmission, a cycle of the SPS transmission, and a number of slots included in a radio frame, and the starting time domain position or the ending time domain position of the PDSCH corresponding to the SPS transmission.

Optionally, the first HPN is determined by a following equation:
HPN₁ ={floor [ CURRENT_slot × 10 / (numberOfSlotsPerFrame × periodicity) + O_{ending-symbol}]} modulo nrofHARQ-Processes, in which the HPN₁ is the first HPN, the CURRENT_slot is the identifier of the slot where the PDSCH corresponding to the SPS transmission is located, the numberOfSlotsPerFrame is the number of slots included in the radio frame, the HARQ-Processes is the number of HARQ processes in the SPS transmission, the periodicity is the cycle of the SPS transmission, and the O_{ending-symbol} is an OFDM symbol index of the ending time domain position of the PDSCH scrambled by the GS-RNTI corresponding to the SPS transmission.

Optionally, the first HPN is determined by a following equation:
HPN₁= {floor[CURRENT_slot × 10 / (numberOfSlotsPerFrame × periodicity)] + O_{ending-symbol} } modulo nrofHARQ-Processes, in which the HPN₁ is the first HPN, the CURRENT_slot is the identifier of the slot where the PDSCH corresponding to the SPS transmission is located, the numberOfSlotsPerFrame is the number of slots included in the radio frame, the HARQ-Processes is the number of HARQ processes in the SPS transmission, the periodicity is the cycle of the SPS transmission, and the O_{ending-symbol} is an OFDM symbol index of the ending time domain position of the PDSCH scrambled by the GS-RNTI corresponding to the SPS transmission.

Optionally, the first HPN is determined by a following equation:
HPN₁= {floor [CURRENT_slot × 10 / (numberOfSlotsPerFrame × periodicity) + O_{starting-symbol}]}modulo nrofHARQ-Processes, in which the HPN₁ is the first HPN, the CURRENT_slot is the identifier of the slot where the PDSCH corresponding to the SPS transmission is located, the numberOfSlotsPerFrame is the number of slots included in the radio frame, the HARQ-Processes is the number of HARQ processes in the SPS transmission, the periodicity is the cycle of the SPS transmission, and the O_{starting-symbol} is an OFDM symbol index of the starting time domain position of the PDSCH scrambled by the GS-RNTI corresponding to the SPS transmission.

Optionally, the first HPN is determined by a following equation:
HPN₁ = {floor [CURRENT_slot × 10 / (numberOfSlotsPerFrame × periodicity)] + O_{starting-symbol} }modulo nrofHARQ-Processes, in which the HPN₁ is the first HPN, the CURRENT_slot is the identifier of the slot where the PDSCH corresponding to the SPS transmission is located, the numberOfSlotsPerFrame is the number of slots included in the radio frame, the HARQ-Processes is the number of HARQ processes in the SPS transmission, the periodicity is the cycle of the SPS transmission, and the O_{starting-symbol} is an OFDM symbol index of the starting time domain position of the PDSCH scrambled by the GS-RNTI corresponding to the SPS transmission.

The communication device 180 is a network device. As illustrated in FIG. 14, FIG. 14 is a block diagram of an apparatus for determining an HPN corresponding to SPS in a MBS provided by an embodiment of the disclosure. As illustrated in FIG. 14, the apparatus 1400 includes, but is not limited to:
a sending module 1410, configured to send SPS configuration information to a terminal; and
a calculating module 1420, configured to determine a first HPN of a PDSCH corresponding to a SPS transmission according to the SPS configuration information.

Optionally, the PDSCH corresponding to the SPS transmission is scrambled by a GS-RNTI corresponding to the terminal.

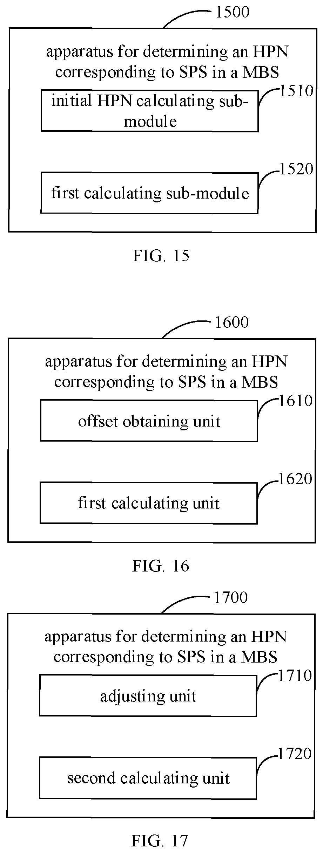

As illustrated in FIG. 15, FIG. 15 is a block diagram of an apparatus for determining an HPN corresponding to SPS in a MBS provided by an embodiment of the disclosure. As illustrated in FIG. 15, the apparatus 1500 includes, but is not limited to:
an initial HPN calculating sub-module 1510, configured to determine an initial HPN of the PDSCH corresponding to the SPS transmission according to an identifier of a slot where the PDSCH corresponding to the SPS transmission is located, a number of HARQ processes in the SPS transmission, a cycle of the SPS transmission, and a number of slots included in a radio frame; and
a first calculating sub-module 1520, configured to determine the first HPN of the PDSCH corresponding to the SPS transmission according to the initial HPN and the SPS configuration information.

As illustrated in FIG. 16, FIG. 16 is a block diagram of an apparatus for determining an HPN corresponding to SPS in a MBS provided by an embodiment of the disclosure. As illustrated in FIG. 16, the apparatus 1600 includes, but is not limited to:
an offset obtaining unit 1610, configured to obtain an HPN offset corresponding to a GS-RNTI used for scrambling of the PDSCH included in the SPS configuration information; and
a first calculating unit 1620, configured to generate the first HPN of the PDSCH corresponding to the SPS transmission according to the initial HPN and the HPN offset.

As illustrated in FIG. 17, FIG. 17 is a block diagram of an apparatus for determining an HPN corresponding to SPS in a MBS provided by an embodiment of the disclosure. As illustrated in FIG. 17, the apparatus 1700 includes, but is not limited to:
an adjusting unit 1710, configured to generate a first HPN adjustment value according to at least one GS-RNTI included in the SPS configuration information; and
a second calculating unit 1720, configured to generate the first HPN of the PDSCH corresponding to the SPS transmission according to the initial HPN and the first HPN adjustment value.

Optionally, the first HPN adjustment value is:
mod(GS-RNTI, nrofHARQ-Processes), and the nrofHARQ-Processes is the number of HARQ processes in the SPS transmission.

Optionally, the calculating module includes:
a second calculating sub-module, configured to determine the first HPN of the PDSCH corresponding to the SPS transmission according to an identifier of a slot where the PDSCH corresponding to the SPS transmission is located, a number of HARQ processes in the SPS transmission, a cycle of the SPS transmission, a number of slots included in a radio frame, and a GS-RNTI.

Optionally, the first HPN is determined by a following equation:
HPN₂= {floor [ CURRENT_slot × 10 / (numberOfSlotsPerFrame × periodicity) + GS-RNTI]} modulo nrofHARQ-Processes, in which, the HPN₂ is the first HPN, the CURRENT_slot is the identifier of the slot where the PDSCH corresponding to the SPS transmission is located, the numberOfSlotsPerFrame is the number of slots included in the radio frame, the HARQ-Processes is the number of HARQ processes in the SPS transmission, and the periodicity is the cycle of the SPS transmission.

Optionally, the first HPN is determined by a following equation:
HPN₂= {floor [CURRENT_slot × 10 / (numberOfSlotsPerFrame × periodicity)]+ GS-RNTI}modulo nrofHARQ-Processe, in which, the HPN₂ is the first HPN, the CURRENT_slot is the identifier of the slot where the PDSCH corresponding to the SPS transmission is located, the numberOfSlotsPerFrame is the number of slots included in the radio frame, the HARQ-Processes is the number of HARQ processes in the SPS transmission, and the periodicity is the cycle of the SPS transmission.

Optionally, GS-RNTI is an RNTI used for scrambling of the PDSCH.

Optionally, the calculating module includes:
a third calculating sub-module, configured to determine the first HPN of the PDSCH corresponding to the SPS transmission according to an identifier of a slot where the PDSCH corresponding to the SPS transmission is located, a number of HARQ processes in the SPS transmission, a cycle of the SPS transmission, a number of slots included in a radio frame, and a starting time domain position or an ending time domain position of the PDSCH corresponding to the SPS transmission.

Optionally, the first HPN is determined by a following equation:
HPN₂={floor [ CURRENT_slot × 10 / (numberOfSlotsPerFrame × periodicity) + O_{ending-symbol}]} modulo nrofHARQ-Processes, in which, the HPN₂ is the first HPN, the CURRENT_slot is the identifier of the slot where the PDSCH corresponding to the SPS transmission is located, the numberOfSlotsPerFrame is the number of slots included in the radio frame, the HARQ-Processes is the number of HARQ processes in the SPS transmission, the periodicity is the cycle of the SPS transmission, and the O_{ending-symbol} is an OFDM symbol index of the ending time domain position of the PDSCH scrambled by the GS-RNTI corresponding to the SPS transmission.

Optionally, the first HPN is determined by a following equation:
HPN₂= {floor[CURRENT_slot × 10 / (numberOfSlotsPerFrame × periodicity)] + O_{ending-symbol} } modulo nrofHARQ-Processes, in which, the HPN₂ is the first HPN, the CURRENT_slot is the identifier of the slot where the PDSCH corresponding to the SPS transmission is located, the numberOfSlotsPerFrame is the number of slots included in the radio frame, the HARQ-Processes is the number of HARQ processes in the SPS transmission, the periodicity is the cycle of the SPS transmission, and the O_{ending-symbol} is an OFDM symbol index of the ending time domain position of the PDSCH scrambled by the GS-RNTI corresponding to the SPS transmission.

Optionally, the first HPN is determined by a following equation:
HPN₂= {floor [CURRENT_slot × 10 / (numberOfSlotsPerFrame × periodicity) + O_{starting-symbol}]}modulo nrofHARQ-Processes, in which the HPN₂ is the first HPN, the CURRENT_slot is the identifier of the slot where the PDSCH corresponding to the SPS transmission is located, the numberOfSlotsPerFrame is the number of slots included in the radio frame, the HARQ-Processes is the number of HARQ processes in the SPS transmission, the periodicity is the cycle of the SPS transmission, and the O_{starting-symbol} is an OFDM symbol index of the starting time domain position of the PDSCH scrambled by the GS-RNTI corresponding to the SPS transmission.

Optionally, the first HPN is determined by a following equation:
HPN₂ = {floor [CURRENT_slot × 10 / (numberOfSlotsPerFrame × periodicity)] + O_{starting-symbol} }modulo nrofHARQ-Processes, in which the HPN₂ is the first HPN, the CURRENT_slot is the identifier of the slot where the PDSCH corresponding to the SPS transmission is located, the numberOfSlotsPerFrame is the number of slots included in the radio frame, the HARQ-Processes is the number of HARQ processes in the SPS transmission, the periodicity is the cycle of the SPS transmission, and the O_{starting-symbol} is an OFDM symbol index of the starting time domain position of the PDSCH scrambled by the GS-RNTI corresponding to the SPS transmission.

As illustrated in FIG. 19, FIG. 19 is a schematic diagram of another communication device 190 provided by an embodiment of the disclosure. The communication device 190 may be a network device, a terminal (e.g., the terminal in the above method embodiments), or a chip, a chip system or a processor that supports the network device to realize the above-described methods, or a chip, a chip system or a processor that supports the terminal to realize the above-described methods. The device may be used to realize the methods described in the above method embodiments, and reference may be made to the illustration of the above-described method embodiments.

The communication device 190 may include one or more processors 1901. The processor 1901 may be a general purpose processor or a dedicated processor, such as, a baseband processor or a central processor. The baseband processor may be used for processing communication protocols and communication data. The central processor may be used for controlling the communication device (e.g., a station, a baseband chip, device terminal, device terminal chip, a DU, or a CU), executing computer programs, and processing data of the computer programs.

Optionally, the communication device 190 may further include one or more memories 1902 on which computer programs 1903 may be stored. The processor 1901 executes the computer programs 1903 to cause the communication device 190 to perform the methods described in the above method embodiments. Optionally, data may be stored in the memory 1902. The communication device 190 and the memory 1902 may be provided separately or may be integrated together.

Optionally, the communication device 190 may also include a transceiver 1904 and an antenna 1905. The transceiver 1904 may be referred to as a transceiver unit, a transceiver machine, or a transceiver circuit, for realizing a transceiver function. The transceiver 1904 may include a receiver and a transmitter. The receiver may be referred to as a receiver machine or a receiving circuit, for realizing the receiving function. The transmitter may be referred to as a transmitter machine or a transmitting circuit, for realizing the transmitting function.

Optionally, the communication device 190 may also include one or more interface circuits 1906. The interface circuits 1906 are used to receive code instructions and transmit them to the processor 1901. The processor 1901 runs the code instructions to cause the communication device 190 to perform the method described in the method embodiments.

The communication device 190 is a terminal (e.g., the terminal in the above method embodiments). The processor 1901 is used to perform step 202 in FIG. 2, steps 301 and 302 in FIG. 3, steps 401 and 402 in FIG. 4, and steps 501 and 502 in FIG. 5. The transceiver 1904 is used to perform step 201 in FIG. 2.

The communication device 190 is a network device. The transceiver 1904 is used to perform step 601 in FIG. 6. The processor 1901 is used to perform step S602 in FIG. 6, steps 701 and 702 in FIG. 7, steps 801 and 802 in FIG. 8, and steps 901 and 902 in FIG. 9.

In an implementation, the processor 1901 may include a transceiver for implementing the receiving and transmitting functions. The transceiver may be, for example, a transceiver circuit, an interface, or an interface circuit. The transceiver circuit, interface, or interface circuitry for implementing the receiving and transmitting functions may be separated or may be integrated together. The transceiver circuit, interface, or interface circuit described above may be used for code/data reading and writing, or may be used for signal transmission or delivery.

In an implementation, the processor 1901 may store a computer program 1903, which runs on the processor 1901 and may cause the communication device 190 to perform the methods described in the above method embodiments. The computer program 1903 may be solidified in the processor 1901, in which case the processor 1901 may be implemented by hardware.

In an implementation, the communication device 190 may include circuits. The circuits may implement the sending, receiving or communicating function in the preceding method embodiments. The processors and transceivers described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processors and transceivers can also be produced using various IC process technologies such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the above description of embodiments may be a network device or a terminal (e.g., the terminal in the above method embodiments), but the scope of the communication device described in the disclosure is not limited thereto, and the structure of the communication device may not be limited by FIG. 19. The communication device may be a stand-alone device or may be part of a larger device. For example, the described communication device may be:
(1) a stand-alone IC, chip, chip system or subsystem;
(2) a collection of ICs including one or more ICs, optionally, the collection of ICs may also include storage components for storing data and computer programs;
(3) an ASIC, such as a modem;
(4) modules that can be embedded within other devices;
(5) receivers, terminals, smart terminals, cellular phones, wireless devices, handheld machines, mobile units, in-vehicle devices, network devices, cloud devices, artificial intelligence devices, and the like; and
(6) others.

The case where the communication device may be a chip or a chip system is described with reference to the schematic structure of the chip shown in FIG. 20. The chip shown in FIG. 20 includes a processor 2001 and an interface 2002. There may be one or more processors 2001, and there may be multiple interfaces 2002.

Optionally, the chip also includes a memory 2003 used for storing necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

Embodiments of the disclosure also provide a system for determining an HPN corresponding to SPS in a MBS. The system includes a communication device as a terminal (e.g., the terminal in the above method embodiments) and a communication device as a network device in the aforementioned embodiment of FIG. 19, or the system includes a communication device as a terminal (e.g., the terminal in the above method embodiments) and a communication device as a network device in the aforementioned embodiment of FIG. 19.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer program on the computer, all or part of processes or functions described in the embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium may be any usable medium to which the computer is able to access or a data storage device such as a server and a data center integrated by one or more usable mediums. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understands that the first, second, and other various numerical numbers involved in the disclosure are only described for the convenience of differentiation, and are not used to limit the scope of embodiments of the disclosure, or to indicate the order of precedence.

The term "at least one" in the disclosure may also be described as one or more, and the term "multiple" may be two, three, four, or more, which is not limited in the disclosure. In embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

The correspondences shown in the tables in the disclosure may be configured or may be predefined. The values of information in the tables are merely examples and may be configured to other values, which are not limited by the disclosure. In configuring the correspondence between the information and the parameters, it is not necessarily required that all the correspondences illustrated in the tables must be configured. For example, the correspondence illustrated in certain rows in the tables in the disclosure may not be configured. For another example, the above tables may be adjusted appropriately, such as splitting, merging, and the like. The names of the parameters shown in the headings of the above tables may be other names that are understandable by the communication device, and the values or representations of the parameters may be other values or representations that are understood by the communication device. Each of the above tables may also be implemented with other data structures, such as, arrays, queues, containers, stacks, linear tables, pointers, chained lists, trees, graphs, structures, classes, heaps, and hash tables.

The term "predefine" in this disclosure may be understood as define, pre-define, store, pre-store, pre-negotiate, pre-configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in hardware or software depends on the particular application and design constraints of the technical solution. Those skilled in the art may use different methods to implement the described functions for each particular application, but such implementations should not be considered as beyond the scope of the disclosure.

It is clearly understood by those skilled in the art that, for the convenience and brevity of description, the specific working processes of the systems, apparatuses, and units described above can be referred to the corresponding processes in the preceding method embodiments, and will not be repeated herein.

The above implementations are only specific implementations of the disclosure, but the scope of protection of the disclosure is not limited thereto. Those skilled in the art familiar to this technical field can easily think of changes or substitutions in the technical scope disclosed by the disclosure, which shall be covered by the scope of protection of the disclosure. Therefore, the scope of protection of the disclosure shall be governed by the scope of protection of the stated claims.

## Claims

1. A method for determining a Hybrid automatic repeat request Process Number, HPN, corresponding to Semi-Persistent Scheduling, SPS, in a Multicast-broadcast Service, MBS, the method being performed by a terminal, comprising:
receiving (201) SPS configuration information sent by a network device; and
determining (202) a first HPN of a Physical Downlink Shared Channel, PDSCH, corresponding to a SPS transmission according to the SPS configuration information and at least one of: a group scheduling radio network temporary identifier, GS-RNTI, used for scrambling of the PDSCH corresponding to the SPS transmission, a starting time domain position or an ending time domain position of the PDSCH corresponding to the SPS transmission, wherein the starting time domain position and the ending time domain position correspond to Orthogonal Frequency Division Multiplexing, OFDM, symbols.

2. The method of claim 1, wherein determining (202) the first HPN of the PDSCH corresponding to the SPS transmission according to the SPS configuration information and at least one of: the GS-RNTI used for scrambling of the PDSCH corresponding to the SPS transmission, the starting time domain position or the ending time domain position of the PDSCH corresponding to the SPS transmission comprises:
determining (301) an initial HPN of the PDSCH corresponding to the SPS transmission according to an identifier of a slot where the PDSCH corresponding to the SPS transmission is located, a number of Hybrid automatic repeat request, HARQ, processes in the SPS transmission, a cycle of the SPS transmission, and a number of slots comprised in a radio frame; and
determining (302) the first HPN according to the initial HPN, the SPS configuration information and at least one of: the GS-RNTI used for scrambling of the PDSCH corresponding to the SPS transmission, the starting time domain position or the ending time domain position of the PDSCH corresponding to the SPS transmission.

3. The method of claim 2, wherein determining (302) the first HPN according to the initial HPN and the SPS configuration information and at least one of: the GS-RNTI used for scrambling of the PDSCH corresponding to the SPS transmission, the starting time domain position or the ending time domain position of the PDSCH corresponding to the SPS transmission comprises:
obtaining (401) an HPN offset corresponding to the GS-RNTI comprised in the SPS configuration information sent by the network device; and
generating (402) the first HPN according to the initial HPN and the HPN offset.

4. The method of claim 2, wherein determining (302) the first HPN according to the initial HPN and the SPS configuration information and at least one of: the GS-RNTI used for scrambling of the PDSCH corresponding to the SPS transmission, the starting time domain position or the ending time domain position of the PDSCH corresponding to the SPS transmission comprises:
generating (501) a first HPN adjustment value according to the GS-RNTI comprised in the SPS configuration information, wherein the GS-RNTI is a radio network temporary identifier, RNTI, used for scrambling of the PDSCH; and
generating (502) the first HPN according to the initial HPN and the first HPN adjustment value;
optionally, wherein the first HPN adjustment value is mod(GS-RNTI, nrofHARQ-Processes), and the nrofHARQ-Processes is the number of HARQ processes in the SPS transmission.

5. The method of any of claims 1 to 4, wherein determining (202) the first HPN of the PDSCH corresponding to the SPS transmission according to the SPS configuration information and at least one of: the GS-RNTI used for scrambling of the PDSCH corresponding to the SPS transmission, the starting time domain position or the ending time domain position of the PDSCH corresponding to the SPS transmission comprises:
determining the first HPN according to an identifier of a slot where the PDSCH corresponding to the SPS transmission is located, a number of HARQ processes in the SPS transmission, a cycle of the SPS transmission, a number of slots comprised in a radio frame, and the GS-RNTI;
optionally, wherein the first HPN is determined by one of following equations:
HPN₁= {floor [ CURRENT_slot × 10 / (numberOfSlotsPerFrame × periodicity) + GS-RNTI]} modulo nrofHARQ-Processes, wherein the HPN₁ is the first HPN, the CURRENT_slot is the identifier of the slot where the PDSCH corresponding to the SPS transmission is located, the numberOfSlotsPerFrame is the number of slots comprised in the radio frame, the HARQ-Processes is the number of HARQ processes in the SPS transmission, the periodicity is the cycle of the SPS transmission, and the GS-RNTI is a RNTI used for the scrambling of the PDSCH; or
HPN₁= {floor [ CURRENT_slot × 10 / (numberOfSlotsPerFrame × periodicity)] + GS-RNTI} modulo nrofHARQ-Processes, wherein the HPN₁ is the first HPN, the CURRENT_slot is the identifier of the slot where the PDSCH corresponding to the SPS transmission is located, the numberOfSlotsPerFrame is the number of slots comprised in the radio frame, the HARQ-Processes is the number of HARQ processes in the SPS transmission, the periodicity is the cycle of the SPS transmission, and the GS-RNTI is a RNTI used for the scrambling of the PDSCH.

6. The method of any of claims 1 to 4, wherein the SPS configuration information comprises the starting time domain position or the ending time domain position of the PDSCH corresponding to the SPS transmission, and determining (202) the first HPN of the PDSCH corresponding to the SPS transmission according to the SPS configuration information and at least one of: the GS-RNTI used for scrambling of the PDSCH corresponding to the SPS transmission, the starting time domain position or the ending time domain position of the PDSCH corresponding to the SPS transmission comprises:
determining the first HPN according to an identifier of a slot where the PDSCH corresponding to the SPS transmission is located, a number of HARQ processes in the SPS transmission, a cycle of the SPS transmission, and a number of slots comprised in a radio frame, and one of the starting time domain position or the ending time domain position of the PDSCH corresponding to the SPS transmission;
optionally, wherein the first HPN is determined by one of following equations:
HPN₁ ={floor [CURRENT_slot × 10 / (numberOfSlotsPerFrame × periodicity) + O_{ending-symbol}]} modulo nrofHARQ-Processes, wherein the HPN₁ is the first HPN, the CURRENT_slot is the identifier of the slot where the PDSCH corresponding to the SPS transmission is located, the numberOfSlotsPerFrame is the number of slots comprised in the radio frame, the HARQ-Processes is the number of HARQ processes in the SPS transmission, the periodicity is the cycle of the SPS transmission, and the O_{ending-symbol} is an Orthogonal Frequency Division Multiplexing, OFDM, symbol index of the ending time domain position of the PDSCH scrambled by the GS-RNTI corresponding to the SPS transmission;
HPN₁= {floor[CURRENT_slot × 10 / (numberOfSlotsPerFrame × periodicity)] + O_{ending-symbol} } modulo nrofHARQ-Processes, wherein the HPN₁ is the first HPN, the CURRENT_slot is the identifier of the slot where the PDSCH corresponding to the SPS transmission is located, the numberOfSlotsPerFrame is the number of slots comprised in the radio frame, the HARQ-Processes is the number of HARQ processes in the SPS transmission, the periodicity is the cycle of the SPS transmission, and the O_{ending-symbol} is an OFDM symbol index of the ending time domain position of the PDSCH scrambled by the GS-RNTI corresponding to the SPS transmission;
HPN₁= {floor [CURRENT_slot × 10 / (numberOfSlotsPerFrame × periodicity) + O_{starting-symbol}]}modulo nrofHARQ-Processes, wherein the HPN₁ is the first HPN, the CURRENT_slot is the identifier of the slot where the PDSCH corresponding to the SPS transmission is located, the numberOfSlotsPerFrame is the number of slots comprised in the radio frame, the HARQ-Processes is the number of HARQ processes in the SPS transmission, the periodicity is the cycle of the SPS transmission, and the O_{starting-symbol} is an OFDM symbol index of the starting time domain position of the PDSCH scrambled by the GS-RNTI corresponding to the SPS transmission; or
HPN₁ = {floor [CURRENT_slot × 10 / (numberOfSlotsPerFrame × periodicity)] + O_{starting-symbol} }modulo nrofHARQ-Processes, wherein the HPN₁ is the first HPN, the CURRENT_slot is the identifier of the slot where the PDSCH corresponding to the SPS transmission is located, the numberOfSlotsPerFrame is the number of slots comprised in the radio frame, the HARQ-Processes is the number of HARQ processes in the SPS transmission, the periodicity is the cycle of the SPS transmission, and the O_{starting-symbol} is an OFDM symbol index of the starting time domain position of the PDSCH scrambled by the GS-RNTI corresponding to the SPS transmission.

7. A method for determining a Hybrid automatic repeat request Process Number, HPN, corresponding to Semi-Persistent Scheduling, SPS, in a Multicast-broadcast Service, MBS, the method being performed by a network device, comprising:
sending (601) SPS configuration information to a terminal; and
determining (602) a first HPN of a Physical Downlink Shared Channel, PDSCH, corresponding to a SPS transmission according to the SPS configuration information and at least one of: a group scheduling radio network temporary identifier, GS-RNTI, used for scrambling of the PDSCH corresponding to the SPS transmission, a starting time domain position or an ending time domain position of the PDSCH corresponding to the SPS transmission, wherein the starting time domain position and the ending time domain position correspond to Orthogonal Frequency Division Multiplexing, OFDM, symbols.

8. The method of claim 7, wherein determining (602) the first HPN of the PDSCH corresponding to the SPS transmission according to the SPS configuration information and at least one of: the GS-RNTI used for scrambling of the PDSCH corresponding to the SPS transmission, the starting time domain position or the ending time domain position of the PDSCH corresponding to the SPS transmission comprises:
determining (701) an initial HPN of the PDSCH corresponding to the SPS transmission according to an identifier of a slot where the PDSCH corresponding to the SPS transmission is located, a number of Hybrid automatic repeat request, HARQ, processes in the SPS transmission, a cycle of the SPS transmission, and a number of slots comprised in a radio frame; and
determining (702) the first HPN according to the initial HPN, the SPS configuration information and at least one of: the GS-RNTI used for scrambling of the PDSCH corresponding to the SPS transmission, the starting time domain position or the ending time domain position of the PDSCH corresponding to the SPS transmission.

9. The method of claim 8, wherein determining (702) the first HPN according to the initial HPN and the SPS configuration information and at least one of: the GS-RNTI used for scrambling of the PDSCH corresponding to the SPS transmission, the starting time domain position or the ending time domain position of the PDSCH corresponding to the SPS transmission comprises:
obtaining (801) an HPN offset corresponding to the GS-RNTI comprised in the SPS configuration information; and
generating (802) the first HPN according to the initial HPN and the HPN offset.

10. The method of claim 8, wherein determining (702) the first HPN according to the initial HPN and the SPS configuration information and at least one of: the GS-RNTI used for scrambling of the PDSCH corresponding to the SPS transmission, the starting time domain position or the ending time domain position of the PDSCH corresponding to the SPS transmission comprises:
generating (901) a first HPN adjustment value according to the GS-RNTI comprised in the SPS configuration information, wherein the GS-RNTI is a radio network temporary identifier, RNTI, used for the scrambling of the PDSCH; and
generating (902) the first HPN according to the initial HPN and the first HPN adjustment value;
optionally, wherein the first HPN adjustment value is mod(GS-RNTI, nrofHARQ-Processes), and the nrofHARQ-Processes is the number of HARQ processes in the SPS transmission.

11. The method of any of claims 7 to 10, wherein determining (602) the first HPN of the PDSCH corresponding to the SPS transmission according to the SPS configuration information and at least one of: the GS-RNTI used for scrambling of the PDSCH corresponding to the SPS transmission, the starting time domain position or the ending time domain position of the PDSCH corresponding to the SPS transmission comprises:
determining the first HPN according to an identifier of a slot where the PDSCH corresponding to the SPS transmission is located, a number of HARQ processes in the SPS transmission, a cycle of the SPS transmission, a number of slots comprised in a radio frame, and the GS-RNTI;
optionally, wherein the first HPN is determined by one of following equations:
HPN₂= {floor [ CURRENT_slot × 10 / (numberOfSlotsPerFrame × periodicity) + GS-RNTI]} modulo nrofHARQ-Processes, wherein the HPN₂ is the first HPN, the CURRENT_slot is the identifier of the slot where the PDSCH corresponding to the SPS transmission is located, numberOfSlotsPerFrame is the number of slots comprised in the radio frame, HARQ-Processes is the number of HARQ processes in the SPS transmission, the periodicity is the cycle of the SPS transmission, and the GS-RNTI is a RNTI used for the scrambling of the PDSCH; or
HPN₂= {floor [CURRENT_slot × 10 / (numberOfSlotsPerFrame × periodicity)]+ GS-RNTI}modulo nrofHARQ-Processes, wherein the HPN₂ is the first HPN, the CURRENT_slot is the identifier of the slot where the PDSCH corresponding to the SPS transmission is located, numberOfSlotsPerFrame is the number of slots comprised in the radio frame, HARQ-Processes is the number of HARQ processes in the SPS transmission, periodicity is the cycle of the SPS transmission, and the GS-RNTI is a RNTI used for the scrambling of the PDSCH.

12. The method of any of claims 7 to 10, wherein the SPS configuration information comprises the starting time domain position or the ending time domain position of the PDSCH corresponding to the SPS transmission, and determining (602) the first HPN of the PDSCH corresponding to the SPS transmission according to the SPS configuration information and at least one of: the GS-RNTI used for scrambling of the PDSCH corresponding to the SPS transmission, the starting time domain position or the ending time domain position of the PDSCH corresponding to the SPS transmission comprises:
determining the first HPN according to an identifier of a slot where the PDSCH corresponding to the SPS transmission is located, a number of HARQ processes in the SPS transmission, a cycle of the SPS transmission, and a number of slots comprised in a radio frame, and one of the starting time domain position or the ending time domain position of the PDSCH corresponding to the SPS transmission;
optionally, wherein the first HPN is determined by one of following equations:
HPN₂={floor [ CURRENT_slot × 10 / (numberOfSlotsPerFrame × periodicity) + O_{ending-symbol}]} modulo nrofHARQ-Processes, wherein the HPN₂ is the first HPN, the CURRENT_slot is the identifier of the slot where the PDSCH corresponding to the SPS transmission is located, the numberOfSlotsPerFrame is the number of slots comprised in the radio frame, the HARQ-Processes is the number of HARQ processes in the SPS transmission, periodicity is the cycle of the SPS transmission, and the O_{ending-symbol} is an Orthogonal Frequency Division Multiplexing, OFDM, symbol index of the ending time domain position of the PDSCH scrambled by the GS-RNTI corresponding to the SPS transmission;
HPN₂= {floor[CURRENT_slot × 10 / (numberOfSlotsPerFrame × periodicity)] + O_{ending-symbol} } modulo nrofHARQ-Processes, wherein the HPN₂ is the first HPN, the CURRENT_slot is the identifier of the slot where the PDSCH corresponding to the SPS transmission is located, the numberOfSlotsPerFrame is the number of slots comprised in the radio frame, the HARQ-Processes is the number of HARQ processes in the SPS transmission, the periodicity is the cycle of the SPS transmission, and the O_{ending-symbol} is an OFDM symbol index of the ending time domain position of the PDSCH scrambled by the GS-RNTI corresponding to the SPS transmission;
HPN₂= {floor [CURRENT_slot × 10 / (numberOfSlotsPerFrame × periodicity) + O_{starting-symbol}]}modulo nrofHARQ-Processes, wherein the HPN₂ is the first HPN, the CURRENT_slot is the identifier of the slot where the PDSCH corresponding to the SPS transmission is located, the numberOfSlotsPerFrame is the number of slots comprised in the radio frame, the HARQ-Processes is the number of HARQ processes in the SPS transmission, the periodicity is the cycle of the SPS transmission, and the O_{starting-symbol} is an OFDM symbol index of the starting time domain position of the PDSCH scrambled by the GS-RNTI corresponding to the SPS transmission; or
HPN₂ = {floor [CURRENT_slot × 10 / (numberOfSlotsPerFrame × periodicity)] + O_{starting-symbol}}modulo nrofHARQ-Processes, wherein the HPN₂ is the first HPN, the CURRENT_slot is the identifier of the slot where the PDSCH corresponding to the SPS transmission is located, the numberOfSlotsPerFrame is the number of slots comprised in the radio frame, the HARQ-Processes is the number of HARQ processes in the SPS transmission, the periodicity is the cycle of the SPS transmission, and the O_{starting-symbol} is an OFDM symbol index of the starting time domain position of the PDSCH scrambled by the GS-RNTI corresponding to the SPS transmission.

13. An apparatus (1000) for determining a Hybrid automatic repeat request Process Number, HPN, corresponding to Semi-Persistent Scheduling, SPS, in a Multicast-broadcast Service, MBS, the apparatus being a terminal, comprising:
a receiving module (1010), configured to receive SPS configuration information sent by a network device; and
a calculating module (1020), configured to determine a first HPN of a PDSCH corresponding to a SPS transmission according to the SPS configuration information and at least one of: a group scheduling radio network temporary identifier, GS-RNTI, used for scrambling of the PDSCH corresponding to the SPS transmission, a starting time domain position or an ending time domain position of the PDSCH corresponding to the SPS transmission, wherein the starting time domain position and the ending time domain position correspond to Orthogonal Frequency Division Multiplexing, OFDM, symbols.

14. An apparatus (1100) for determining a Hybrid automatic repeat request Process Number, HPN, corresponding to Semi-Persistent Scheduling, SPS, in a Multicast-broadcast Service, MBS, the apparatus being a network device, comprising:
a sending module (1110), configured to send SPS configuration information to a terminal; and
a calculating module (1120), configured to determine a first HPN of a Physical Downlink Shared Channel, PDSCH, corresponding to a SPS transmission according to the SPS configuration information and at least one of: a group scheduling radio network temporary identifier, GS-RNTI, used for scrambling of the PDSCH corresponding to the SPS transmission, a starting time domain position or an ending time domain position of the PDSCH corresponding to the SPS transmission, wherein the starting time domain position and the ending time domain position correspond to Orthogonal Frequency Division Multiplexing, OFDM, symbols.

15. A computer readable storage medium comprising instructions which, when executed by a computer, cause the computer to carry out the method of any of claims 1-12.

## Patentansprüche

1. Ein Verfahren zum Bestimmen einer Hybrid Automatic Repeat Request-Prozessnummer, HPN, die einer Semi-Persistent Scheduling, SPS, in einem Multicast-Broadcast-Dienst, MBS, entspricht, wobei das Verfahren von einem Terminal ausgeführt wird, umfassend:
Empfangen (201) von von einem Netzwerkgerät gesendeter SPS-Konfigurationsinformation; und
Bestimmen (202) einer ersten HPN eines Physical Downlink Shared Channel, PDSCH, die einer SPS-Übertragung entspricht, gemäß der SPS-Konfigurationsinformation und mindestens einem von: einer Gruppenscheduling-Funknetztemporärkennung, GS-RNTI, die für das Scrambling des PDSCH verwendet wird, der der SPS-Übertragung entspricht, einer Startzeitdomänenposition oder einer Endzeitdomänenposition des PDSCH, die der SPS-Übertragung entspricht, wobei die Startzeitdomänenposition und die Endzeitdomänenposition Orthogonal Frequency Division Multiplexing, OFDM,-Symbolen entsprechen.

2. Das Verfahren nach Anspruch 1, wobei das Bestimmen (202) der ersten HPN des PDSCH, die der SPS-Übertragung entspricht, gemäß der SPS-Konfigurationsinformation und mindestens einem von: dem für das Scrambling des PDSCH, der der SPS-Übertragung entspricht, verwendeten GS-RNTI, der Startzeitdomänenposition oder der Endzeitdomänenposition des PDSCH, der der SPS-Übertragung entspricht, Folgendes umfasst:
Bestimmen (301) einer initialen HPN des PDSCH, der der SPS-Übertragung entspricht, gemäß einem Bezeichner eines Slots, in dem der PDSCH, der der SPS-Übertragung entspricht, gelegen ist, einer Anzahl von Hybrid Automatic Repeat Request, HARQ,-Prozessen in der SPS-Übertragung, einem Zyklus der SPS-Übertragung und einer Anzahl von Slots in einem Funkrahmen; und
Bestimmen (302) der ersten HPN gemäß der initialen HPN, der SPS-Konfigurationsinformation und mindestens einem von: dem für das Scrambling des PDSCH, der der SPS-Übertragung entspricht, verwendeten GS-RNTI, der Startzeitdomänenposition oder der Endzeitdomänenposition des PDSCH, der der SPS-Übertragung entspricht.

3. Das Verfahren nach Anspruch 2, wobei das Bestimmen (302) der ersten HPN gemäß der initialen HPN und der SPS-Konfigurationsinformation und mindestens einem von: dem für das Scrambling des PDSCH, der der SPS-Übertragung entspricht, verwendeten GS-RNTI, der Startzeitdomänenposition oder der Endzeitdomänenposition des PDSCH, der der SPS-Übertragung entspricht, Folgendes umfasst:
Erhalten (401) eines HPN-Offsets, der dem GS-RNTI entspricht, enthalten in der von dem Netzwerkgerät gesendeten SPS-Konfigurationsinformation; und
Erzeugen (402) der ersten HPN gemäß der initialen HPN und dem HPN-Offset.

4. Das Verfahren nach Anspruch 2, wobei das Bestimmen (302) der ersten HPN gemäß der initialen HPN und der SPS-Konfigurationsinformation und mindestens einem von: dem für das Scrambling des PDSCH, der der SPS-Übertragung entspricht, verwendeten GS-RNTI, der Startzeitdomänenposition oder der Endzeitdomänenposition des PDSCH, der der SPS-Übertragung entspricht, Folgendes umfasst:
Erzeugen (501) eines ersten HPN-Anpassungswerts gemäß dem in der SPS-Konfigurationsinformation enthaltenen GS-RNTI, wobei der GS-RNTI eine Funknetztemporärkennung, RNTI, ist, die für das Scrambling des PDSCH verwendet wird; und
Erzeugen (502) der ersten HPN gemäß der initialen HPN und dem ersten HPN-Anpassungswert;
optional, wobei der erste HPN-Anpassungswert mod(GS-RNTI, nrofHARQ-Processes) ist und die nrofHARQ-Processes die Anzahl der HARQ-Prozesse in der SPS-Übertragung ist.

5. Das Verfahren nach einem der Ansprüche 1 bis 4, wobei das Bestimmen (202) der ersten HPN des PDSCH, die der SPS-Übertragung entspricht, gemäß der SPS-Konfigurationsinformation und mindestens einem von: dem für das Scrambling des PDSCH, der der SPS-Übertragung entspricht, verwendeten GS-RNTI, der Startzeitdomänenposition oder der Endzeitdomänenposition des PDSCH, der der SPS-Übertragung entspricht, Folgendes umfasst:
Bestimmen der ersten HPN gemäß einem Bezeichner eines Slots, in dem der PDSCH, der der SPS-Übertragung entspricht, gelegen ist, einer Anzahl von HARQ-Prozessen in der SPS-Übertragung, einem Zyklus der SPS-Übertragung, einer Anzahl von in einem Funkrahmen enthaltenen Slots und dem GS-RNTI;
optional, wobei die erste HPN durch eine der folgenden Gleichungen bestimmt wird:
HPN1= {floor [ CURRENT_slot × 10 / (numberOfSlotsPerFrame × periodicity) + GS-RNTI]} modulo nrofHARQ-Processes, wobei die HPN1 die erste HPN ist, der CURRENT_slot der Bezeichner des Slots ist, in dem der PDSCH, der der SPS-Übertragung entspricht, gelegen ist, die numberOfSlotsPerFrame die Anzahl von in dem Funkrahmen enthaltenen Slots ist, die HARQ-Processes die Anzahl der HARQ-Prozesse in der SPS-Übertragung ist, die periodicity der Zyklus der SPS-Übertragung ist und der GS-RNTI eine RNTI ist, die für das Scrambling des PDSCH verwendet wird; oder
HPN1= {floor [ CURRENT_slot × 10 / (numberOfSlotsPerFrame × periodicity)] + GS-RNTI} modulo nrofHARQ-Processes, wobei die HPN1 die erste HPN ist, der CURRENT_slot der Bezeichner des Slots ist, in dem der PDSCH, der der SPS-Übertragung entspricht, gelegen ist, die numberOfSlotsPerFrame die Anzahl von in dem Funkrahmen enthaltenen Slots ist, die HARQ-Processes die Anzahl der HARQ-Prozesse in der SPS-Übertragung ist, die periodicity der Zyklus der SPS-Übertragung ist und der GS-RNTI eine RNTI ist, die für das Scrambling des PDSCH verwendet wird.

6. Das Verfahren nach einem der Ansprüche 1 bis 4, wobei die SPS-Konfigurationsinformation die Startzeitdomänenposition oder die Endzeitdomänenposition des PDSCH umfasst, der der SPS-Übertragung entspricht, und wobei das Bestimmen (202) der ersten HPN des PDSCH, die der SPS-Übertragung entspricht, gemäß der SPS-Konfigurationsinformation und mindestens einem von: dem für das Scrambling des PDSCH, der der SPS-Übertragung entspricht, verwendeten GS-RNTI, der Startzeitdomänenposition oder der Endzeitdomänenposition des PDSCH, der der SPS-Übertragung entspricht, Folgendes umfasst:
Bestimmen der ersten HPN gemäß einem Bezeichner eines Slots, in dem der PDSCH, der der SPS-Übertragung entspricht, gelegen ist, einer Anzahl von HARQ-Prozessen in der SPS-Übertragung, einem Zyklus der SPS-Übertragung und einer Anzahl von in einem Funkrahmen enthaltenen Slots sowie einer von der Startzeitdomänenposition oder der Endzeitdomänenposition des PDSCH, der der SPS-Übertragung entspricht;
optional, wobei die erste HPN durch eine der folgenden Gleichungen bestimmt wird:
HPN1 ={floor [CURRENT_slot × 10 / (numberOfSlotsPerFrame × periodicity) + Oending-symbol]} modulo nrofHARQ-Processes, wobei die HPN1 die erste HPN ist, der CURRENT_slot der Bezeichner des Slots ist, in dem der PDSCH, der der SPS-Übertragung entspricht, gelegen ist, die numberOfSlotsPerFrame die Anzahl von in dem Funkrahmen enthaltenen Slots ist, die HARQ-Processes die Anzahl der HARQ-Prozesse in der SPS-Übertragung ist, die periodicity der Zyklus der SPS-Übertragung ist und das Oending-symbol ein Orthogonal Frequency Division Multiplexing, OFDM,-Symbolindex der Endzeitdomänenposition des durch den GS-RNTI gescrambelten PDSCH ist, der der SPS-Übertragung entspricht;
HPN1= {floor[CURRENT_slot × 10 / (numberOfSlotsPerFrame × periodicity)] + Oending-symbol } modulo nrofHARQ-Processes, wobei die HPN1 die erste HPN ist, der CURRENT_slot der Bezeichner des Slots ist, in dem der PDSCH, der der SPS-Übertragung entspricht, gelegen ist, die numberOfSlotsPerFrame die Anzahl von in dem Funkrahmen enthaltenen Slots ist, die HARQ-Processes die Anzahl der HARQ-Prozesse in der SPS-Übertragung ist, die periodicity der Zyklus der SPS-Übertragung ist und das Oending-symbol ein OFDM-Symbolindex der Endzeitdomänenposition des durch den GS-RNTI gescrambelten PDSCH ist, der der SPS-Übertragung entspricht;
HPN1= {floor [CURRENT_slot × 10 / (numberOfSlotsPerFrame × periodicity) + Ostarting-symbol]}modulo nrofHARQ-Processes, wobei die HPN1 die erste HPN ist, der CURRENT_slot der Bezeichner des Slots ist, in dem der PDSCH, der der SPS-Übertragung entspricht, gelegen ist, die numberOfSlotsPerFrame die Anzahl von in dem Funkrahmen enthaltenen Slots ist, die HARQ-Processes die Anzahl der HARQ-Prozesse in der SPS-Übertragung ist, die periodicity der Zyklus der SPS-Übertragung ist und das Ostarting-symbol ein OFDM-Symbolindex der Startzeitdomänenposition des durch den GS-RNTI gescrambelten PDSCH ist, der der SPS-Übertragung entspricht; oder
HPN1 = {floor [CURRENT_slot × 10 / (numberOfSlotsPerFrame × periodicity)] + Ostarting-symbol }modulo nrofHARQ-Processes, wobei die HPN1 die erste HPN ist, der CURRENT_slot der Bezeichner des Slots ist, in dem der PDSCH, der der SPS-Übertragung entspricht, gelegen ist, die numberOfSlotsPerFrame die Anzahl von in dem Funkrahmen enthaltenen Slots ist, die HARQ-Processes die Anzahl der HARQ-Prozesse in der SPS-Übertragung ist, die periodicity der Zyklus der SPS-Übertragung ist und das Ostarting-symbol ein OFDM-Symbolindex der Startzeitdomänenposition des durch den GS-RNTI gescrambelten PDSCH ist, der der SPS-Übertragung entspricht.

7. Ein Verfahren zum Bestimmen einer Hybrid Automatic Repeat Request-Prozessnummer, HPN, die einer Semi-Persistent Scheduling, SPS, in einem Multicast-Broadcast-Dienst, MBS, entspricht, wobei das Verfahren von einem Netzwerkgerät ausgeführt wird, umfassend:
Senden (601) von SPS-Konfigurationsinformation an ein Terminal; und
Bestimmen (602) einer ersten HPN eines Physical Downlink Shared Channel, PDSCH, die einer SPS-Übertragung entspricht, gemäß der SPS-Konfigurationsinformation und mindestens einem von: einer Gruppenscheduling-Funknetztemporärkennung, GS-RNTI, die für das Scrambling des PDSCH, der der SPS-Übertragung entspricht, verwendet wird, einer Startzeitdomänenposition oder einer Endzeitdomänenposition des PDSCH, der der SPS-Übertragung entspricht, wobei die Startzeitdomänenposition und die Endzeitdomänenposition Orthogonal Frequency Division Multiplexing, OFDM,-Symbolen entsprechen.

8. Das Verfahren nach Anspruch 7, wobei das Bestimmen (602) der ersten HPN des PDSCH, die der SPS-Übertragung entspricht, gemäß der SPS-Konfigurationsinformation und mindestens einem von: dem für das Scrambling des PDSCH, der der SPS-Übertragung entspricht, verwendeten GS-RNTI, der Startzeitdomänenposition oder der Endzeitdomänenposition des PDSCH, der der SPS-Übertragung entspricht, Folgendes umfasst:
Bestimmen (701) einer initialen HPN des PDSCH, der der SPS-Übertragung entspricht, gemäß einem Bezeichner eines Slots, in dem der PDSCH, der der SPS-Übertragung entspricht, gelegen ist, einer Anzahl von Hybrid Automatic Repeat Request, HARQ,-Prozessen in der SPS-Übertragung, einem Zyklus der SPS-Übertragung und einer Anzahl von in einem Funkrahmen enthaltenen Slots; und
Bestimmen (702) der ersten HPN gemäß der initialen HPN, der SPS-Konfigurationsinformation und mindestens einem von: dem für das Scrambling des PDSCH, der der SPS-Übertragung entspricht, verwendeten GS-RNTI, der Startzeitdomänenposition oder der Endzeitdomänenposition des PDSCH, der der SPS-Übertragung entspricht.

9. Das Verfahren nach Anspruch 8, wobei das Bestimmen (702) der ersten HPN gemäß der initialen HPN und der SPS-Konfigurationsinformation und mindestens einem von: dem für das Scrambling des PDSCH, der der SPS-Übertragung entspricht, verwendeten GS-RNTI, der Startzeitdomänenposition oder der Endzeitdomänenposition des PDSCH, der der SPS-Übertragung entspricht, Folgendes umfasst:
Erhalten (801) eines HPN-Offsets, der dem GS-RNTI entspricht, enthalten in der SPS-Konfigurationsinformation; und
Erzeugen (802) der ersten HPN gemäß der initialen HPN und dem HPN-Offset.

10. Das Verfahren nach Anspruch 8, wobei das Bestimmen (702) der ersten HPN gemäß der initialen HPN und der SPS-Konfigurationsinformation und mindestens einem von: dem für das Scrambling des PDSCH, der der SPS-Übertragung entspricht, verwendeten GS-RNTI, der Startzeitdomänenposition oder der Endzeitdomänenposition des PDSCH, der der SPS-Übertragung entspricht, Folgendes umfasst:
Erzeugen (901) eines ersten HPN-Anpassungswerts gemäß dem in der SPS-Konfigurationsinformation enthaltenen GS-RNTI, wobei der GS-RNTI eine Funknetztemporärkennung, RNTI, ist, die für das Scrambling des PDSCH verwendet wird; und
Erzeugen (902) der ersten HPN gemäß der initialen HPN und dem ersten HPN-Anpassungswert;
optional, wobei der erste HPN-Anpassungswert mod(GS-RNTI, nrofHARQ-Processes) ist und die nrofHARQ-Processes die Anzahl der HARQ-Prozesse in der SPS-Übertragung ist.

11. Das Verfahren nach einem der Ansprüche 7 bis 10, wobei das Bestimmen (602) der ersten HPN des PDSCH, die der SPS-Übertragung entspricht, gemäß der SPS-Konfigurationsinformation und mindestens einem von: dem für das Scrambling des PDSCH, der der SPS-Übertragung entspricht, verwendeten GS-RNTI, der Startzeitdomänenposition oder der Endzeitdomänenposition des PDSCH, der der SPS-Übertragung entspricht, Folgendes umfasst:
Bestimmen der ersten HPN gemäß einem Bezeichner eines Slots, in dem der PDSCH, der der SPS-Übertragung entspricht, gelegen ist, einer Anzahl von HARQ-Prozessen in der SPS-Übertragung, einem Zyklus der SPS-Übertragung, einer Anzahl von in einem Funkrahmen enthaltenen Slots und dem GS-RNTI;
optional, wobei die erste HPN durch eine der folgenden Gleichungen bestimmt wird:
HPN2= {floor [ CURRENT_slot × 10 / (numberOfSlotsPerFrame × periodicity) + GS-RNTI]} modulo nrofHARQ-Processes, wobei die HPN2 die erste HPN ist, der CURRENT_slot der Bezeichner des Slots ist, in dem der PDSCH, der der SPS-Übertragung entspricht, gelegen ist, numberOfSlotsPerFrame die Anzahl von in dem Funkrahmen enthaltenen Slots ist, HARQ-Processes die Anzahl der HARQ-Prozesse in der SPS-Übertragung ist, die periodicity der Zyklus der SPS-Übertragung ist und der GS-RNTI eine RNTI ist, die für das Scrambling des PDSCH verwendet wird; oder
HPN2= {floor [CURRENT_slot × 10 / (numberOfSlotsPerFrame × periodicity)]+ GS-RNTI}modulo nrofHARQ-Processes, wobei die HPN2 die erste HPN ist, der CURRENT_slot der Bezeichner des Slots ist, in dem der PDSCH, der der SPS-Übertragung entspricht, gelegen ist, numberOfSlotsPerFrame die Anzahl von in dem Funkrahmen enthaltenen Slots ist, HARQ-Processes die Anzahl der HARQ-Prozesse in der SPS-Übertragung ist, periodicity der Zyklus der SPS-Übertragung ist und der GS-RNTI eine RNTI ist, die für das Scrambling des PDSCH verwendet wird.

12. Das Verfahren nach einem der Ansprüche 7 bis 10, wobei die SPS-Konfigurationsinformation die Startzeitdomänenposition oder die Endzeitdomänenposition des PDSCH umfasst, der der SPS-Übertragung entspricht, und wobei das Bestimmen (602) der ersten HPN des PDSCH, die der SPS-Übertragung entspricht, gemäß der SPS-Konfigurationsinformation und mindestens einem von: dem für das Scrambling des PDSCH, der der SPS-Übertragung entspricht, verwendeten GS-RNTI, der Startzeitdomänenposition oder der Endzeitdomänenposition des PDSCH, der der SPS-Übertragung entspricht, Folgendes umfasst:
Bestimmen der ersten HPN gemäß einem Bezeichner eines Slots, in dem der PDSCH, der der SPS-Übertragung entspricht, gelegen ist, einer Anzahl von HARQ-Prozessen in der SPS-Übertragung, einem Zyklus der SPS-Übertragung und einer Anzahl von in einem Funkrahmen enthaltenen Slots sowie einer von der Startzeitdomänenposition oder der Endzeitdomänenposition des PDSCH, der der SPS-Übertragung entspricht;
optional, wobei die erste HPN durch eine der folgenden Gleichungen bestimmt wird:
HPN2={floor [ CURRENT_slot × 10 / (numberOfSlotsPerFrame × periodicity) + Oending-symbol]} modulo nrofHARQ-Processes, wobei die HPN2 die erste HPN ist, der CURRENT_slot der Bezeichner des Slots ist, in dem der PDSCH, der der SPS-Übertragung entspricht, gelegen ist, die numberOfSlotsPerFrame die Anzahl von in dem Funkrahmen enthaltenen Slots ist, die HARQ-Processes die Anzahl der HARQ-Prozesse in der SPS-Übertragung ist, periodicity der Zyklus der SPS-Übertragung ist und das Oending-symbol ein Orthogonal Frequency Division Multiplexing, OFDM,-Symbolindex der Endzeitdomänenposition des durch den GS-RNTI gescrambelten PDSCH ist, der der SPS-Übertragung entspricht;
HPN2= {floor[CURRENT_slot × 10 / (numberOfSlotsPerFrame × periodicity)] + Oending-symbol } modulo nrofHARQ-Processes, wobei die HPN2 die erste HPN ist, der CURRENT_slot der Bezeichner des Slots ist, in dem der PDSCH, der der SPS-Übertragung entspricht, gelegen ist, die numberOfSlotsPerFrame die Anzahl von in dem Funkrahmen enthaltenen Slots ist, die HARQ-Processes die Anzahl der HARQ-Prozesse in der SPS-Übertragung ist, die periodicity der Zyklus der SPS-Übertragung ist und das Oending-symbol ein OFDM-Symbolindex der Endzeitdomänenposition des durch den GS-RNTI gescrambelten PDSCH ist, der der SPS-Übertragung entspricht;
HPN2= {floor [CURRENT_slot × 10 / (numberOfSlotsPerFrame × periodicity) + Ostarting-symbol]}modulo nrofHARQ-Processes, wobei die HPN2 die erste HPN ist, der CURRENT_slot der Bezeichner des Slots ist, in dem der PDSCH, der der SPS-Übertragung entspricht, gelegen ist, die numberOfSlotsPerFrame die Anzahl von in dem Funkrahmen enthaltenen Slots ist, die HARQ-Processes die Anzahl der HARQ-Prozesse in der SPS-Übertragung ist, die periodicity der Zyklus der SPS-Übertragung ist und das Ostarting-symbol ein OFDM-Symbolindex der Startzeitdomänenposition des durch den GS-RNTI gescrambelten PDSCH ist, der der SPS-Übertragung entspricht; oder
HPN2 = {floor [CURRENT_slot × 10 / (numberOfSlotsPerFrame × periodicity)] + Ostarting-symbol}modulo nrofHARQ-Processes, wobei die HPN2 die erste HPN ist, der CURRENT_slot der Bezeichner des Slots ist, in dem der PDSCH, der der SPS-Übertragung entspricht, gelegen ist, die numberOfSlotsPerFrame die Anzahl von in dem Funkrahmen enthaltenen Slots ist, die HARQ-Processes die Anzahl der HARQ-Prozesse in der SPS-Übertragung ist, die periodicity der Zyklus der SPS-Übertragung ist und das Ostarting-symbol ein OFDM-Symbolindex der Startzeitdomänenposition des durch den GS-RNTI gescrambelten PDSCH ist, der der SPS-Übertragung entspricht.

13. Eine Vorrichtung (1000) zum Bestimmen einer Hybrid Automatic Repeat Request-Prozessnummer, HPN, die einer Semi-Persistent Scheduling, SPS, in einem Multicast-Broadcast-Dienst, MBS, entspricht, wobei die Vorrichtung ein Terminal ist, umfassend:
ein Empfangsmodul (1010), konfiguriert zum Empfangen von von einem Netzwerkgerät gesendeter SPS-Konfigurationsinformation; und
ein Berechnungsmodul (1020), konfiguriert zum Bestimmen einer ersten HPN eines PDSCH, der einer SPS-Übertragung entspricht, gemäß der SPS-Konfigurationsinformation und mindestens einem von: einer Gruppenscheduling-Funknetztemporärkennung, GS-RNTI, die für das Scrambling des PDSCH, der der SPS-Übertragung entspricht, verwendet wird, einer Startzeitdomänenposition oder einer Endzeitdomänenposition des PDSCH, der der SPS-Übertragung entspricht, wobei die Startzeitdomänenposition und die Endzeitdomänenposition Orthogonal Frequency Division Multiplexing, OFDM,-Symbolen entsprechen.

14. Eine Vorrichtung (1100) zum Bestimmen einer Hybrid Automatic Repeat Request-Prozessnummer, HPN, die einer Semi-Persistent Scheduling, SPS, in einem Multicast-Broadcast-Dienst, MBS, entspricht, wobei die Vorrichtung ein Netzwerkgerät ist, umfassend:
ein Sendemodul (1110), konfiguriert zum Senden von SPS-Konfigurationsinformation an ein Terminal; und
ein Berechnungsmodul (1120), konfiguriert zum Bestimmen einer ersten HPN eines Physical Downlink Shared Channel, PDSCH, die einer SPS-Übertragung entspricht, gemäß der SPS-Konfigurationsinformation und mindestens einem von: einer Gruppenscheduling-Funknetztemporärkennung, GS-RNTI, die für das Scrambling des PDSCH, der der SPS-Übertragung entspricht, verwendet wird, einer Startzeitdomänenposition oder einer Endzeitdomänenposition des PDSCH, der der SPS-Übertragung entspricht, wobei die Startzeitdomänenposition und die Endzeitdomänenposition Orthogonal Frequency Division Multiplexing, OFDM,-Symbolen entsprechen.

15. Ein computerlesbares Speichermedium, umfassend Anweisungen, die, wenn sie von einem Computer ausgeführt werden, den Computer veranlassen, das Verfahren nach einem der Ansprüche 1-12 auszuführen.

## Revendications

1. Procédé pour déterminer un numéro de processus de requête automatique de répétition hybride, HPN, correspondant à un ordonnancement semi-persistant, SPS, dans un service de diffusion groupée, MBS, le procédé étant exécuté par un terminal, comprenant:
la réception (201) d'informations de configuration de SPS envoyées par un dispositif réseau; et
la détermination (202) d'un premier HPN d'un canal physique de liaison descendante partagé, PDSCH, correspondant à une transmission de SPS selon les informations de configuration de SPS et au moins l'un parmi: un identifiant temporaire de réseau radio d'ordonnancement de groupe, GS-RNTI, utilisé pour l'embrouillage du PDSCH correspondant à la transmission de SPS, une position de domaine temporel de début ou une position de domaine temporel de fin du PDSCH correspondant à la transmission de SPS, dans lequel la position de domaine temporel de début et la position de domaine temporel de fin correspondent à des symboles de multiplexage par répartition orthogonale de la fréquence, OFDM.

2. Procédé selon la revendication 1, dans lequel la détermination (202) du premier HPN du PDSCH correspondant à la transmission de SPS selon les informations de configuration de SPS et au moins l'un parmi: le GS-RNTI utilisé pour l'embrouillage du PDSCH correspondant à la transmission de SPS, la position de domaine temporel de début ou la position de domaine temporel de fin du PDSCH correspondant à la transmission SPS consiste à:
déterminer (301) un HPN initial du PDSCH correspondant à la transmission de SPS en fonction d'un identifiant d'un créneau où se trouve le PDSCH correspondant à la transmission de SPS, d'un nombre de processus de requête automatique de répétition hybride, HARQ, dans la transmission de SPS, d'un cycle de la transmission de SPS et d'un nombre de créneaux compris dans une trame radio; et
déterminer (302) le premier HPN en fonction du HPN initial, des informations de configuration de SPS et d'au moins l'un parmi: le GS-RNTI utilisé pour l'embrouillage du PDSCH correspondant à la transmission de SPS, la position de domaine temporel de début ou la position de domaine temporel de fin du PDSCH correspondant à la transmission de SPS.

3. Procédé selon la revendication 2, dans lequel la détermination (302) du premier HPN en fonction du HPN initial et des informations de configuration de SPS et au moins l'un parmi: le GS-RNTI utilisé pour l'embrouillage du PDSCH correspondant à la transmission de SPS, la position de domaine temporel de début ou la position de domaine temporel de fin du PDSCH correspondant à la transmission SPS consiste à:
obtenir (401) un décalage HPN correspondant au GS-RNTI compris dans les informations de configuration de SPS envoyées par le dispositif réseau; et
générer (402) le premier HPN en fonction du HPN initial et du décalage HPN.

4. Procédé selon la revendication 2, dans lequel la détermination (302) du premier HPN en fonction du HPN initial et des informations de configuration de SPS et au moins l'un parmi: le GS-RNTI utilisé pour l'embrouillage du PDSCH correspondant à la transmission de SPS, la position de domaine temporel de début ou la position de domaine temporel de fin du PDSCH correspondant à la transmission SPS consiste à:
générer (501) une première valeur d'ajustement de HPN en fonction du GS-RNTI compris dans les informations de configuration de SPS, le GS-RNTI étant un identifiant temporaire de réseau radio, RNTI, utilisé pour l'embrouillage du PDSCH; et
générer (502) le premier HPN en fonction du HPN initial et de la première valeur d'ajustement HPN;
éventuellement, dans lequel la première valeur d'ajustement HPN est mod(GS-RNTI, nrofHARQ-Processes), et nrofHARQ-Processes est le nombre de processus HARQ dans la transmission de SPS.

5. Procédé selon l'une quelconque des revendications 1 à 4, dans lequel la détermination (202) du premier HPN du PDSCH correspondant à la transmission de SPS selon les informations de configuration de SPS et au moins l'un parmi: le GS-RNTI utilisé pour l'embrouillage du PDSCH correspondant à la transmission de SPS, la position de domaine temporel de début ou la position de domaine temporel de fin du PDSCH correspondant à la transmission SPS consiste à:
déterminer le premier HPN conformément à un identifiant d'un créneau où est situé le PDSCH correspondant à la transmission de SPS, d'un nombre de processus de HARQ dans la transmission de SPS, d'un cycle de la transmission de SPS et d'un nombre de créneaux compris dans une trame radio; et du GS-RNTI;
éventuellement, dans lequel le premier HPN est déterminé par l'une des équations suivantes:
HPN₁= {floor [ CURRENT_slot × 10 / (numberOfSlotsPerFrame × periodicity) + GS-RNTI]} modulo nrofHARQ-Processes, dans laquelle HPN₁ est le premier HPN, le CURRENT_slot est l'identifiant du créneau où se trouve le PDSCH correspondant à la transmission de SPS, le numberOfSlotsPerFrame est le nombre de créneaux compris dans la trame radio, les processus HARQ sont le nombre de processus HARQ dans la transmission de SPS, la périodicité est le cycle de la transmission de SPS, et le GS-RNTI est un RNTI utilisé pour l'embrouillage du PDSCH;
ou
HPN₁= {floor [ CURRENT_slot × 10 / (numberOfSlotsPerFrame × periodicity) + GS-RNTI]} modulo nrofHARQ-Processes, dans laquelle HPN₁ est le premier HPN, le CURRENT_slot est l'identifiant du créneau où se trouve le PDSCH correspondant à la transmission de SPS, le numberOfSlotsPerFrame est le nombre de créneaux compris dans la trame radio, les processus HARQ sont le nombre de processus HARQ dans la transmission de SPS, la périodicité est le cycle de la transmission de SPS, et le GS-RNTI est un RNTI utilisé pour l'embrouillage du PDSCH;

6. Procédé selon l'une quelconque des revendications 1 à 4, dans lequel les informations de configuration de SPS comprennent la position de domaine temporel de début ou la position de domaine temporel de fin du PDSCH correspondant à la transmission de SPS, et la détermination (202) du premier HPN du PDSCH correspondant à la transmission de SPS selon les informations de configuration de SPS et au moins l'un parmi: le GS-RNTI utilisé pour l'embrouillage du PDSCH correspondant à la transmission de SPS, la position de domaine temporel de début ou la position de domaine temporel de fin du PDSCH correspondant à la transmission SPS consiste à:
déterminer le premier HPN conformément à un identifiant d'un créneau où est situé le PDSCH correspondant à la transmission de SPS, d'un nombre de processus de HARQ dans la transmission de SPS, d'un cycle de la transmission de SPS et d'un nombre de créneaux compris dans une trame radio; et l'une parmi la position de domaine temporel de début ou la position de domaine temporel de fin du PDSCH correspondant à la transmission de SPS;
éventuellement, dans lequel le premier HPN est déterminé par l'une des équations suivantes:
HPN₁ ={floor [CURRENT_slot × 10 / (numberOfSlotsPerFrame × periodicity) + O_{ending-symbol}]} modulo nrofHARQ-Processes, dans laquelle HPN₁ est le premier HPN, le CURRENT_slot est l'identifiant du créneau où se trouve le PDSCH correspondant à la transmission de SPS, le numberOfSlotsPerFrame est le nombre de créneaux compris dans la trame radio, les processus HARQ sont le nombre de processus HARQ dans la transmission de SPS, la périodicité est le cycle de la transmission de SPS, et le O_{ending-symbol} est un indice de symbole de multiplexage par répartition orthogonale de la fréquence, OFDM, de la position de domaine temporel de fin du PDSCH embrouillé par le GS-RNTI correspondant à la transmission de SPS;
HPN₁= {floor [ CURRENT_slot × 10 / (numberOfSlotsPerFrame × periodicity) + O_{ending-symbol}]} modulo nrofHARQ-Processes, dans laquelle HPN₁ est le premier HPN, le CURRENT _slot est l'identifiant du créneau où se trouve le PDSCH correspondant à la transmission de SPS, le numberOfSlotsPerFrame par trame est le nombre de créneaux compris dans la trame radio, les processus HARQ sont le nombre de processus HARQ dans la transmission de SPS, la périodicité est le cycle de la transmission de SPS, et le O_{ending-symbol} est un indice de symbole OFDM de la position de domaine temporel de fin du PDSCH embrouillé par le GS-RNTI correspondant à la transmission SPS;
HPN₁= {floor [CURRENT_slot × 10 / (numberOfSlotsPerFrame × periodicity) + O_{starting-symbol}]}modulo nrofHARQ-Processes, dans laquelle HPN₁ est le premier HPN, le CURRENT_slot est l'identifiant du créneau où se trouve le PDSCH correspondant à la transmission SPS, le numberOfSlotsPerFrame est le nombre de créneaux compris dans la trame radio, les processus HARQ sont le nombre de processus HARQ dans la transmission de SPS, la périodicité est le cycle de la transmission de SPS, et le O_{starting -symbol} est un indice de symbole de OFM de la position de domaine temporel de départ du PDSCH embrouillé par le GS-RNTI correspondant à la transmission de SPS; ou
HPN₁ ={floor [CURRENT_slot × 10 / (numberOfSlotsPerFrame × periodicity) + O_{starting-symbol}]} modulo nrofHARQ-Processes, dans laquelle HPN₁ est le premier HPN, le CURRENT _slot est l'identifiant du créneau où se trouve le PDSCH correspondant à la transmission de SPS, le numberOfSlotsPerFrame est le nombre de créneaux compris dans la trame radio, les processus HARQ sont le nombre de processus HARQ dans la transmission de SPS, la périodicité est le cycle de la transmission de SPS, et le O_{starting-symbol} est un indice de symbole OFDM de la position de domaine temporel de départ du PDSCH embrouillé par le GS-RNTI correspondant à la transmission de SPS.

7. Procédé pour déterminer un numéro de processus de requête automatique de répétition hybride, HPN, correspondant à un ordonnancement semi-persistant, SPS, dans un service de diffusion groupée, MBS, le procédé étant exécuté par un dispositif réseau, comprenant:
l'envoi (601) d'informations de configuration à un terminal; et
la détermination (602) d'un premier HPN d'un canal physique de liaison descendante partagé, PDSCH, correspondant à une transmission de SPS selon les informations de configuration de SPS et au moins l'un parmi: un identifiant temporaire de réseau radio d'ordonnancement de groupe, GS-RNTI, utilisé pour l'embrouillage du PDSCH correspondant à la transmission de SPS, une position de domaine temporel de début ou une position de domaine temporel de fin du PDSCH correspondant à la transmission de SPS, dans lequel la position de domaine temporel de début et la position de domaine temporel de fin correspondent à des symboles de multiplexage par répartition orthogonale de la fréquence, OFDM.

8. Procédé selon la revendication 7, dans lequel la détermination (602) du premier HPN du PDSCH correspondant à la transmission de SPS selon les informations de configuration de SPS et au moins l'un parmi: le GS-RNTI utilisé pour l'embrouillage du PDSCH correspondant à la transmission de SPS, la position de domaine temporel de début ou la position de domaine temporel de fin du PDSCH correspondant à la transmission SPS consiste à:
déterminer (701) un HPN initial du PDSCH correspondant à la transmission de SPS en fonction d'un identifiant d'un créneau où se trouve le PDSCH correspondant à la transmission de SPS, d'un nombre de processus de requête automatique de répétition hybride, HARQ, dans la transmission de SPS, d'un cycle de la transmission de SPS et d'un nombre de créneaux compris dans une trame radio; et
déterminer (702) le premier HPN conformément au HPN initial, les informations de configuration de SPS et au moins l'un parmi: le GS-RNTI utilisé pour l'embrouillage du PDSCH correspondant à la transmission de SPS, la position de domaine temporel de début ou la position de domaine temporel de fin du PDSCH correspondant à la transmission SPS.

9. Procédé selon la revendication 8, dans lequel la détermination (702) du premier HPN en fonction du HPN initial et des informations de configuration de SPS et au moins l'un parmi: le GS-RNTI utilisé pour l'embrouillage du PDSCH correspondant à la transmission de SPS, la position de domaine temporel de début ou la position de domaine temporel de fin du PDSCH correspondant à la transmission SPS consiste à:
obtenir (801) un décalage HPN correspondant au GS-RNTI compris dans les informations de configuration de SPS; et
générer (802) le premier HPN en fonction du HPN initial et du décalage HPN.

10. Procédé selon la revendication 8, dans lequel la détermination (702) du premier HPN en fonction du HPN initial et des informations de configuration de SPS et au moins l'un parmi: le GS-RNTI utilisé pour l'embrouillage du PDSCH correspondant à la transmission de SPS, la position de domaine temporel de début ou la position de domaine temporel de fin du PDSCH correspondant à la transmission SPS consiste à:
générer (901) une première valeur d'ajustement de HPN en fonction du GS-RNTI compris dans les informations de configuration de SPS, le GS-RNTI étant un identifiant temporaire de réseau radio, RNTI, utilisé pour l'embrouillage du PDSCH; et
générer (902) le premier HPN en fonction du HPN initial et de la première valeur d'ajustement HPN;
éventuellement, dans lequel la première valeur d'ajustement HPN est mod(GS-RNTI, nrofHARQ-Processes), et nrofHARQ-Processes est le nombre de processus HARQ dans la transmission de SPS.

11. Procédé selon l'une quelconque des revendications 7 à 10, dans lequel la détermination (602) du premier HPN du PDSCH correspondant à la transmission de SPS selon les informations de configuration de SPS et au moins l'un parmi: le GS-RNTI utilisé pour l'embrouillage du PDSCH correspondant à la transmission de SPS, la position de domaine temporel de début ou la position de domaine temporel de fin du PDSCH correspondant à la transmission SPS consiste à:
déterminer le premier HPN conformément à un identifiant d'un créneau où est situé le PDSCH correspondant à la transmission de SPS, d'un nombre de processus de HARQ dans la transmission de SPS, d'un cycle de la transmission de SPS et d'un nombre de créneaux compris dans une trame radio; et du GS-RNTI;
éventuellement, dans lequel le premier HPN est déterminé par l'une des équations suivantes:
HPN₂= {floor [ CURRENT_slot × 10 / (numberOfSlotsPerFrame × periodicity) + GS-RNTI]} modulo nrofHARQ-Processes, dans laquelle HPN₂ est le premier HPN, le CURRENT_slot est l'identifiant du créneau où se trouve le PDSCH correspondant à la transmission de SPS, le numberOfSlotsPerFrame est le nombre de créneaux compris dans la trame radio, les processus HARQ sont le nombre de processus HARQ dans la transmission de SPS, la périodicité est le cycle de la transmission de SPS, et le GS-RNTI est un RNTI utilisé pour l'embrouillage du PDSCH; ou
HPN₂= {floor [ CURRENT_slot × 10 / (numberOfSlotsPerFrame × periodicity) + GS-RNTI]} modulo nrofHARQ-Processes, dans laquelle HPN₂ est le premier HPN, le CURRENT_slot est l'identifiant du créneau où se trouve le PDSCH correspondant à la transmission de SPS, le numberOfSlotsPerFrame est le nombre de créneaux compris dans la trame radio, les processus HARQ sont le nombre de processus HARQ dans la transmission de SPS, la périodicité est le cycle de la transmission de SPS, et le GS-RNTI est un RNTI utilisé pour l'embrouillage du PDSCH.

12. Procédé selon l'une quelconque des revendications 7 à 10, dans lequel les informations de configuration de SPS comprennent la position de domaine temporel de début ou la position de domaine temporel de fin du PDSCH correspondant à la transmission de SPS, et la détermination (602) du premier HPN du PDSCH correspondant à la transmission de SPS selon les informations de configuration de SPS et au moins l'un parmi: le GS-RNTI utilisé pour l'embrouillage du PDSCH correspondant à la transmission de SPS, la position de domaine temporel de début ou la position de domaine temporel de fin du PDSCH correspondant à la transmission SPS consiste à:
déterminer le premier HPN conformément à un identifiant d'un créneau où est situé le PDSCH correspondant à la transmission de SPS, d'un nombre de processus de HARQ dans la transmission de SPS, d'un cycle de la transmission de SPS et d'un nombre de créneaux compris dans une trame radio; et l'une parmi la position de domaine temporel de début ou la position de domaine temporel de fin du PDSCH correspondant à la transmission de SPS;
éventuellement, dans lequel le premier HPN est déterminé par l'une des équations suivantes:
HPN₂ ={floor [CURRENT_slot × 10 / (numberOfSlotsPerFrame × periodicity) + O_{ending-symbol}]} modulo nrofHARQ-Processes, dans laquelle HPN₂ est le premier HPN, CURRENT _slot est l'identifiant du créneau où se trouve le PDSCH correspondant à la transmission de SPS, le numberOfSlotsperFrame est le nombre de créneaux compris dans la trame radio, les processus HARQ sont le nombre de processus HARQ dans la transmission de SPS, la périodicité est le cycle de la transmission de SPS, et le O_{ending-symbol} est un indice de symbole de multiplexage par répartition orthogonale de la fréquence, OFDM, de la position de domaine temporel de fin du PDSCH embrouillé par le GS-RNTI correspondant à la transmission de SPS;
HPN₂= {floor [ CURRENT_slot × 10 / (numberOfSlotsPerFrame × periodicity) + O_{ending-symbol}]} modulo nrofHARQ-Processes, dans laquelle HPN₂ est le premier HPN, CURRENT _slot est l'identifiant du créneau où se trouve le PDSCH correspondant à la transmission de SPS, le numberOfSlotsperFrame est le nombre de créneaux compris dans la trame radio, les processus HARQ sont le nombre de processus HARQ dans la transmission de SPS, la périodicité est le cycle de la transmission de SPS, et le O_{ending-symbol} est un indice de symbole OFDM de la position de domaine temporel de fin du PDSCH embrouillé par le GS-RNTI correspondant à la transmission SPS;
HPN₂= {floor [CURRENT_slot × 10 / (numberOfSlotsPerFrame × periodicity) + O_{starting-symbol}]}modulo nrofHARQ-Processes, dans laquelle HPN₂ est le premier HPN, CURRENT _slot est l'identifiant du créneau où se trouve le PDSCH correspondant à la transmission SPS, le numberOfSlotsperFrame est le nombre de créneaux compris dans la trame radio, les processus HARQ sont le nombre de processus HARQ dans la transmission de SPS, la périodicité est le cycle de la transmission de SPS, et le O_{starting -symbol} est un indice de symbole de OFM de la position de domaine temporel de départ du PDSCH embrouillé par le GS-RNTI correspondant à la transmission de SPS; ou
HPN₂ ={floor [CURRENT_slot × 10 / (numberOfSlotsPerFrame × periodicity) + O_{starting-symbol}} modulo nrofHARQ-Processes, dans laquelle HPN₂ est le premier HPN, CURRENT _slot est l'identifiant du créneau où se trouve le PDSCH correspondant à la transmission de SPS, le numberOfSlotsperFrame est le nombre de créneaux compris dans la trame radio, les processus HARQ sont le nombre de processus HARQ dans la transmission de SPS, la périodicité est le cycle de la transmission de SPS, et le O_{starting-symbol} est un indice de symbole OFDM de la position de domaine temporel de départ du PDSCH embrouillé par le GS-RNTI correspondant à la transmission de SPS;

13. Appareil (1000) pour déterminer un numéro de processus de requête automatique de répétition hybride, HPN, correspondant à un ordonnancement semi-persistant, SPS, dans un service de diffusion groupée, MBS, l'appareil étant un terminal, comprenant:
un module de réception (1010) configuré pour recevoir les informations de configuration de SPS envoyées par un dispositif réseau; et
un module de calcul (1020), configuré pour déterminer un premier HPN d'un PDSCH, correspondant à une transmission de SPS selon les informations de configuration de SPS et au moins l'un parmi: un identifiant temporaire de réseau radio d'ordonnancement de groupe, GS-RNTI, utilisé pour l'embrouillage du PDSCH correspondant à la transmission de SPS, une position de domaine temporel de début ou une position de domaine temporel de fin du PDSCH correspondant à la transmission de SPS, dans lequel la position de domaine temporel de début et la position de domaine temporel de fin correspondent à des symboles de multiplexage par répartition orthogonale de la fréquence, OFDM.

14. Appareil (1100) permettant de déterminer un numéro de processus de requête automatique de répétition hybride, HPN, correspondant à un ordonnancement semi-persistant, SPS, dans un service de diffusion groupée, MBS, l'appareil étant un dispositif réseau, comprenant:
un module d'envoi (1110), configuré pour envoyer les informations de configuration à un terminal; et
un module de calcul (1120), configuré pour déterminer un premier HPN d'un canal physique de liaison descendante partagé, PDSCH, correspondant à une transmission de SPS selon les informations de configuration de SPS et au moins l'un parmi: un identifiant temporaire de réseau radio d'ordonnancement de groupe, GS-RNTI, utilisé pour l'embrouillage du PDSCH correspondant à la transmission de SPS, une position de domaine temporel de début ou une position de domaine temporel de fin du PDSCH correspondant à la transmission de SPS, dans lequel la position de domaine temporel de début et la position de domaine temporel de fin correspondent à des symboles de multiplexage par répartition orthogonale de la fréquence, OFDM.

15. Support d'enregistrement lisible par ordinateur comprenant des instructions qui, lorsqu'elles sont exécutées par un ordinateur, amènent l'ordinateur à mettre en œuvre le procédé selon l'une quelconque des revendications 1 à 12.
